# EUROPÄISCHE PATENTSCHRIFT

(11) **EP 3 268 599 B1**
(45) Veröffentlichungstag und Bekanntmachung des Hinweises auf die Patenterteilung: **08.05.2019**
(21) Anmeldenummer: 16711158.2
(22) Anmeldetag: 07.03.2016
(51) Int. Cl.: F02M 35/10, F02D 9/10, F16K 1/22

(54) **SAUGMODUL EINER FRISCHLUFTANLAGE**
INTAKE MODULE OF A FRESH AIR SYSTEM
MODULE D'ASPIRATION D'UNE INSTALLATION D'AIR NEUF

(30) Priorität: 13.03.2015 DE 102015204604
(43) Veröffentlichungstag der Anmeldung: 17.01.2018
(73) Patentinhaber: Mahle International GmbH, 70376 Stuttgart (DE)
(72) Erfinder: DETTINGER, Marco, 75181 Pforzheim (DE); ENDRESS, Mathias, 70176 Stuttgart (DE); GÜTH, Wolfgang, 70597 Stuttgart (DE)
(74) Vertreter: BRP Renaud & Partner mbB Rechtsanwälte Patentanwälte Steuerberater
(86) Internationale Anmeldenummer: PCT/EP2016/054780
(87) Internationale Veröffentlichungsnummer: WO 2016/146416

(56) Entgegenhaltungen:
- DE-A1-102011 087 234
- JP-A- H07 158 458
- JP-A- 2010 168 995
- JP-A- 2014 001 719
- JP-A- 2014 101 800

## Beschreibung

Die vorliegende Erfindung betrifft ein Saugmodul einer Frischluftanlage für eine Brennkraftmaschine, insbesondere in einem Kraftfahrzeug.

Ein derartiges Saugmodul weist üblicherweise ein Gehäuse auf, das mit einer Einlassöffnung für Frischluft und mit einem Flanschabschnitt zum Befestigen bzw. Anschließen des Gehäuses an der Brennkraftmaschine ausgestattet ist. Im Flanschabschnitt sind mehrere Auslassöffnungen für die Frischluft vorgesehen. Im Gehäuse ist üblicherweise ein Verteilerraum ausgebildet, von dem im Betrieb der Brennkraftmaschine die über die Einlassöffnung zugeführte Frischluft auf die Auslassöffnungen verteilt wird. Dabei ist je Brennraum der Brennkraftmaschine zumindest eine derartige Auslassöffnung vorgesehen. Ein derartiges Saugmodul kann sowohl bei einer aufgeladenen Brennkraftmaschine als auch bei einer nicht aufgeladenen Brennkraftmaschine zum Einsatz kommen.

Ferner ist es üblich, derartige Saugmodule mit einer Steuereinrichtung zum Steuern eines durchströmbaren Querschnitts wenigstens einer der Auslassöffnungen auszustatten. Üblicherweise ist dabei jedem Brennraum zumindest eine solche steuerbare Auslassöffnung zugeordnet. Ferner kann vorgesehen sein, dass jedem Brennraum der Brennkraftmaschine zwei Auslassöffnungen zugeordnet sind, von denen jeweils die eine gesteuert ist, also bezüglich ihres durchströmbaren Querschnitts veränderbar ist, während die jeweils andere ungesteuert ist, also permanent vollständig geöffnet ist. Mit Hilfe einer derartigen Steuereinrichtung kann abhängig vom aktuellen Betriebszustand der Brennkraftmaschine die Frischluftzufuhr optimiert werden. Eine derartige Steuereinrichtung kann mit einer Steuerwelle ausgestattet sein, die wenigstens eine drehfest auf der Steuerwelle angeordnete Steuerklappe für die jeweilige Auslassöffnung aufweist. Mit Hilfe der jeweiligen Steuerklappe lässt sich somit die jeweilige Auslassöffnung hinsichtlich ihres durchströmbaren Querschnitts steuern. Insbesondere lässt sich die jeweilige Auslassöffnung mit Hilfe der zugehörigen Steuerklappe öffnen oder schließen. Ebenso sind grundsätzlich beliebige Zwischenstellungen denkbar. Je nach Funktion der Steuerklappe kann diese auch als Tumbleklappe oder Drallklappe bezeichnet werden.

Da die Herstellung eines derartigen Saugmoduls in großen Stückzahlen und möglichst preiswert durchgeführt werden soll, ergeben sich zusätzliche Probleme bei der Lagerung der Steuerwelle am Gehäuse. Das üblicherweise aus Kunststoff spritzgeformte Gehäuse kann sich herstellungsbedingt verziehen, was eine möglichst reibungsarme Lagerung der Steuerwelle beeinträchtigen kann. Hierdurch besteht jedoch die Gefahr einer Beeinträchtigung der Funktionssicherheit der Steuerwelle. Dementsprechend ist der Aufwand zur Realisierung einer funktionssicheren Lagerung der Steuerwelle am Gehäuse vergleichsweise groß. Zusätzliche Probleme können sich z.B. beim nachträglichen Einbau der Steuerwelle in das Gehäuse ergeben, wenn der Einbau beispielsweise an einer für ein Anschließen des Gehäuses an die Brennkraftmaschine vorgesehenen Anschlussseite des Flanschabschnitts erfolgen soll. Durch Verzug des Gehäuses ergeben sich relativ große Herstellungstoleranzen, die eine funktionssichere Montage der Steuerwelle erschweren.

Derartige Probleme treten nicht nur bei Saugmodulen mit steuerbaren Auslassöffnungen auf, sondern bei allen Saugmodulen, in oder an deren Gehäuse steuerbare Öffnungen vorgesehen sind. Dementsprechend ist die vorliegende Erfindung nicht auf Saugmodule mit steuerbaren Auslassöffnungen beschränkt, sondern betrifft alle Saugmodule, die steuerbare Öffnungen aufweisen oder enthalten. Somit sind auch Saugmodule betroffen, die in ihrem Inneren Bypassöffnungen aufweisen, die zum Schalten von Saugrohrlängen geöffnet und geschlossen werden können. Auch hierzu kann eine solche Steuereinrichtung zum Steuern der durchströmbaren Querschnitte dieser Bypassöffnungen zum Einsatz kommen.

Aus der DE 44 99 626 T1 ist ein Saugmodul bekannt, das mit einem Gehäuse ausgestattet ist, das eine Einlassöffnung für Frischluft und einen Flanschabschnitt mit mehreren Auslassöffnungen für Frischluft aufweist. Das bekannte Saugmodul besitzt schaltbare Saugrohrlängen, deren wirksame Länge durch Öffnen und Schließen von Bypassöffnungen geschaltet wird. Hierzu ist das Saugmodul außerdem mit einer Steuereinrichtung zum Steuern eines durchströmbaren Querschnitts dieser Bypassöffnungen ausgestattet. Die Steuereinrichtung weist eine Steuerwelle und mehrere drehfest auf der Steuerwelle angeordnete Steuerklappen für die Bypassöffnungen auf. Dabei ist die Steuerwelle mittels wenigstens einer Lagerkonsole am Gehäuse um eine Drehachse drehbar gelagert. Das Gehäuse weist wenigstens eine Lageraufnahme zum Aufnehmen der jeweiligen Lagerkonsole auf, die eine Einführöffnung aufweist. Dabei ist die jeweilige Lagerkonsole in einer senkrecht zur Drehachse orientierten Einführrichtung durch die jeweilige Einführöffnung in die zugehörige Lageraufnahme eingeführt. Die jeweilige Lagerkonsole weist an ihrer Außenseite zwei Außenflächen auf, die bezüglich einer Querrichtung, die senkrecht zur Drehachse und senkrecht zur Einführrichtung verläuft, voneinander abgewandt sind.

JP2014101800 offenbart auch ein Saugmodul, wobei eine Steuerwelle mittels Lagerkonsolen drehbar gelagert ist.

Beim bekannten Saugmodul weisen die Außenflächen der jeweiligen Lagerkonsole jeweils eine parallel zur Einführrichtung verlaufende Längsnut auf. Außerdem ist an einem in der Einführrichtung vorausgehenden vorderen Ende der Lagerkonsole ein vorstehender, sich in der Umfangsrichtung erstreckender, gekrümmter Steg vorgesehen. Komplementär zu den Längsnuten und dem gekrümmten Steg sind an entsprechenden Begrenzungswänden der zugehörigen Lageraufnahme zwei nach innen vorstehende, gerade Stege und eine sich in der Umfangsrichtung erstreckende gekrümmte Nut vorgesehen. Bei in die Lageraufnahme eingesteckter Lagerkonsole greifen einerseits die geraden Stege in die Längsnuten und andererseits der gekrümmte Steg in die gekrümmte Nut ein, jeweils nach Art einer Nut-Feder-Führung, um eine Positionierung der Lagerkonsole in der Lageraufnahme parallel zur Drehachse der Welle zu erreichen. Die Positionierung der Lagerkonsole quer zur Drehachse erfolgt über den flächigen Kontakt zwischen den Außenflächen der Lagerkonsole und entsprechenden Innenflächen der Lageraufnahme, die hierzu entsprechend genau gefertigt werden müssen.

Die vorliegende Erfindung beschäftigt sich mit dem Problem, für ein Saugmodul der vorstehend genannten Art eine verbesserte Ausführungsform anzugeben, die sich insbesondere durch einen reduzierten Herstellungsaufwand auszeichnet. Ferner sind eine verbesserte Lagerung der Steuerwelle und/oder eine erhöhte Funktionssicherheit der Steuereinrichtung angestrebt.

Die vorliegende Erfindung betrifft zwei grundsätzliche Aspekte, die voneinander unabhängig sind, also alternativ zur Anwendung kommen können, die vorzugsweise jedoch auch miteinander kombiniert werden können. Insbesondere lässt sich der eine Aspekt einschließlich seiner Ausführungsformen mit dem anderen Aspekt und dessen Ausführungsformen beliebig kombinieren.

Das der Erfindung zugrunde gelegte Problem wird durch besagte Aspekte gelöst, insbesondere jedoch durch den Gegenstand des unabhängigen Anspruchs. Vorteilhafte Ausführungsformen ergeben sich insbesondere durch die abhängigen Ansprüche.

Die Erfindung betrifft ein Saugmodul gemäß Anspruch 1.

Bevorzugt kommen mehrere Lagerkonsolen zum Einsatz, also zwei oder mehr Lagerkonsolen, die jeweils in eine eigene Lageraufnahme eingesetzt sind. Die Steuerwelle kann dabei einen durchgehenden, einteiligen Wellenkörper aufweisen, der z.B. durch einen metallischen Stab gebildet ist, an den die Steuerklappen aus Kunststoff angespritzt sein können. Ebenso ist denkbar, für die Steuerwelle einen mehrteiligen Wellenkörper vorzusehen, der aus mehreren stabförmigen Abschnitten zusammengebaut ist. Die einzelnen Wellenkörperabschnitte können z.B. durch angespritzte Steuerklappen aneinander befestigt sein.

Gemäß einem ersten Aspekt der vorliegenden Erfindung kann zur Lösung des genannten Problems vorgesehen sein, dass die jeweilige Lagerkonsole mit wenigstens zwei Positionsblöcken ausgestattet ist, die mit dazu komplementären, in der zugehörigen Lageraufnahme ausgebildeten Führungskonturen zum Ausrichten der Lagerkonsole zusammenwirken, wenn die Lagerkonsole in die Lageraufnahme eingesetzt wird. Hierdurch lässt sich eine optimale Ausrichtung der Lagerung auf die Steuerwelle realisieren. Insbesondere lässt sich eine besonders reibungsarme Lagerung für die Steuerwelle und somit eine vergleichsweise hohe Funktionssicherheit für die Steuerwelle realisieren.

Im Einzelnen wird gemäß dem ersten Aspekt vorgeschlagen, die jeweilige Lagerkonsole an ihrer Außenseite mit zwei Außenflächen auszustatten, die bezüglich einer Querrichtung, die im Wesentlichen senkrecht zur Drehachse und im Wesentlichen senkrecht zur Einführrichtung verläuft, voneinander abgewandt sind und die jeweils wenigstens einen davon abstehenden Positionsblock aufweisen. Die jeweilige Lageraufnahme weist dann an ihrer Innenseite für den jeweiligen Positionsblock eine dazu komplementäre Führungskontur zum Ausrichten der Lagerkonsole in einer parallel zur Drehachse verlaufenden Längsrichtung und in der Querrichtung auf.

Der jeweilige Positionsblock ist dabei zweckmäßig integral an der Lagerkonsole ausgeformt, also damit materialeinheitlich hergestellt.

Besonders vorteilhaft ist eine Ausführungsform, bei der die jeweilige Lagerkonsole an ihren Außenflächen ausschließlich über diese Positionsblöcke mit dem Gehäuse in Kontakt steht. Zusätzlich oder alternativ kann vorgesehen sein, dass die jeweilige Lagerkonsole, insbesondere in der Längsrichtung und/oder in der Querrichtung und/oder in der Einführrichtung, ausschließlich über diese Positionierblöcke mit dem Gehäuse in Kontakt steht. Hierdurch wird erreicht, dass die Positionierung der Lagerkonsole relativ zum Gehäuse in der Längsrichtung und/oder in der Querrichtung ausschließlich über diese Positionierblöcke erfolgt. Da sich die Positionierblöcke im Vergleich zur gesamten Lagerkonsole relativ klein dimensionieren lassen, lassen sich auch beim Spritzformen im Bereich der Positionierblöcke relativ enge Toleranzen einhalten, da dort relativ wenig Verzug auftritt. Demnach kann eine qualitativ hochwertige Positionierung erzielt werden, auch wenn die Lagerkonsole preiswert durch Spritzformen aus Kunststoff hergestellt wird. Sofern der Kontakt im Bereich der Außenflächen nur mittelbar über die Positionsblöcke erfolgt, ist außerhalb der Positionsblöcke in der Querrichtung und/oder in der Längsrichtung zwischen den Außenflächen der jeweiligen Lagerkonsole und der Innenseite der zugehörigen Lageraufnahme ein Zwischenraum oder Spalt ausgebildet.

Allgemein kann vorgesehen sein, dass die jeweilige Lagerkonsole in der Längsrichtung und/oder in der Querrichtung und/oder in der Einführrichtung ausschließlich an den Positionierblöcken in direktem Kontakt mit dem Gehäuse steht. Vorzugsweise ist dann außerhalb der Positionierblöcke ein Zwischenraum ausgebildet zwischen der Außenseite der Lagerkonsole und der Innenseite der Lageraufnahme.

Vorteilhaft kann vorgesehen sein, dass der jeweilige Positionsblock eine parallel zur Längsrichtung gemessene Länge aufweist, die kleiner ist als eine parallel zur Längsrichtung gemessene Länge der Lagerkonsole. Insbesondere ist der Positionsblock maximal halb so lang wie die Lagerkonsole. Zusätzlich oder alternativ kann der jeweilige Positionsblock eine parallel zur Einführrichtung gemessene Höhe aufweisen, die kleiner ist als eine parallel zur Längsrichtung gemessene Höhe der Lagerkonsole. Insbesondere ist der Positionsblock maximal halb so hoch wie die Lagerkonsole.

Ferner kann optional vorgesehen sein, dass der jeweilige Positionsblock von zwei in der Längsrichtung voneinander entfernten Längsenden der Lagerkonsole jeweils beabstandet ist. Zusätzlich oder alternativ kann vorgesehen sein, dass der jeweilige Positionsblock von zwei in der Einführrichtung voneinander entfernten Enden der Lagerkonsole jeweils beabstandet ist. Beim Einsetzen der Lagerkonsole in die Lageraufnahme geht eines dieser Enden in der Einführrichtung vorraus und bildet ein vorderes Ende der Lagerkonsole, während das andere Ende in der Einführrichtung nacheilt und ein hinteres Ende der Lagerkonsole bildet. Durch die Beabstandung des jeweiligen Positionierblocks von den jeweiligen Enden der Lagerkonsole ergibt sich eine deutlich kleinere Dimensionierung für den Positionierblock, die es ermöglicht, dort enge Toleranzen einzuhalten.

Zweckmäßig ist der jeweilige Positionsblock quaderförmig ausgestaltet, so dass er wenigstens vier außenliegende vorzugsweise ebene Führungsflächen besitzt, nämlich eine quer zur Querrichtung verlaufende Führungsfläche, die von der Lagerkonsole abgewandt ist, zumindest eine quer zur Einführrichtung verlaufende Führungsfläche, die in der Einführrichtung vorausgeht, und zwei quer zur Längsrichtung verlaufende Führungsflächen, die voneinander abgewandt sind.

Gemäß einer vorteilhaften Ausführungsform kann der jeweilige Positionsblock zwei bezüglich der Längsrichtung voneinander abgewandte ebene Längspositionierflächen aufweisen, die sich parallel zueinander und senkrecht zur Längsrichtung erstrecken. Zweckmäßig weist die zugehörige Lageraufnahme an ihrer Innenseite für den jeweiligen Positionsblock zwei bezüglich der Längsrichtung einander zugewandte ebene Längsführungsflächen auf, die sich parallel zueinander und senkrecht zur Längsrichtung erstrecken und an denen je eine der Längspositionierflächen des jeweiligen Positionsblocks flächig anliegt. Durch diese Maßnahme ergibt sich eine besonders effiziente und zuverlässige Ausrichtung der jeweiligen Lagerkonsole in der Längsrichtung. Mit anderen Worten, die in der jeweiligen Lagerkonsole definierte Drehachse wird mit Hilfe der Längspositionierflächen und der Längsführungsflächen parallel zur Längsrichtung ausgerichtet.

Bei einer anderen vorteilhaften Ausführungsform kann der jeweilige Positionsblock eine ebene Querpositionierfläche aufweisen, die sich senkrecht zur Querrichtung erstreckt. Die zugehörige Lageraufnahme kann dann zweckmäßig an ihrer Innenseite für den jeweiligen Positionsblock eine ebene Querführungsfläche aufweisen, die sich senkrecht zur Querrichtung erstreckt und an der die Querpositionierfläche des jeweiligen Positionsblocks flächig anliegt. Durch diese Maßnahme ergibt sich eine optimierte Ausrichtung der jeweiligen Lagerkonsole bezüglich der Querrichtung. Mit anderen Worten, die durch die jeweilige Lagerkonsole definierte Drehachse wird durch die Querpositionierflächen, die mit den Querführungsflächen zusammenwirken, zentriert.

Gemäß der Erfindung weisen die jeweilige Lagerkonsole auf jeder ihrer beiden Außenflächen zumindest zwei solche Positionsblöcke auf, die in der Einführrichtung voneinander beabstandet sind. Hierdurch ergibt sich eine besonders effiziente Ausrichtung der Lagerkonsole innerhalb der jeweiligen Lageraufnahme.

Eine weitere Verbesserung ergibt sich gemäß einer Weiterbildung, bei der auf der jeweiligen Außenfläche wenigstens zwei solche Positionsblöcke in der Einführrichtung zueinander fluchtend angeordnet sind. Hierdurch vereinfacht sich die Ausgestaltung der zugehörigen Führungskontur innerhalb der Lageraufnahme.

Weiterhin kann zweckmäßig vorgesehen sein, dass der in der Einführrichtung vorangehende Positionsblock kleiner dimensioniert ist als der in der Einführrichtung nachfolgende Positionsblock. Hierdurch wirken die Positionsblöcke separat mit den zugehörigen Führungskonturen zusammen, was eine zuverlässige Ausrichtung der Lagerkonsole verbessert.

Insbesondere kann vorgesehen sein, dass beim voran- bzw. vorausgehenden, kleiner dimensionierten Positionsblock ein parallel zur Längsrichtung gemessener Abstand der Längspositionierflächen kleiner ist als beim nachfolgenden, größer dimensionierten Positionsblock. Des Weiteren kann vorgesehen sein, dass ein parallel zur Querrichtung gemessener Abstand der Querpositionierfläche von der jeweiligen Außenseite der Lagerkonsole beim vorausgehenden, kleiner dimensionierten Positionsblock kleiner ist als beim nachfolgenden, größer dimensionierten Positionsblock.

Gemäß einer anderen vorteilhaften Ausführungsform kann der eine Positionsblock in der Einführrichtung zwischen der Steuerwelle und dem anderen Positionsblock angeordnet sein. Hierdurch lässt sich mit Hilfe der jeweiligen Lagerkonsole die Steuerwelle vergleichsweise tief in den Flanschabschnitt einführen. Hierdurch lassen sich insbesondere auch größere Steuerklappen verwenden.

Alternativ kann bei einer anderen Ausführungsform vorgesehen sein, die Steuerwelle bezüglich der Einführrichtung zwischen den beiden Positionsblöcken anzuordnen, wodurch eine besonders sichere Ausrichtung der Steuerwelle möglich ist.

Bei einer anderen Ausführungsform kann die jeweilige Lagerkonsole auf beiden Außenflächen jeweils wenigstens zwei in der Längsrichtung voneinander beabstandete Positionsblöcke aufweisen. Während bei nur einem Positionsblock die Lagerkonsole insgesamt in der Längsrichtung vergleichsweise klein bzw. kompakt gebaut werden kann, ermöglicht das Vorsehen von wenigstens zwei in der Längsrichtung beabstandeten Positionsblöcken eine vergleichsweise breit bzw. groß bauende Lagerkonsole, bezogen auf die Längsrichtung. Je größer die Lagerkonsole in der Längsrichtung baut, desto effizienter ist die Ausrichtung der Lagerwelle. Ferner lassen sich in einer breiten Lagerkonsole auch größere Lagerkräfte abstützen. Zweckmäßig können die beiden Positionsblöcke an der jeweiligen Außenfläche in der Längsrichtung zueinander fluchtend angeordnet sein.

Bei einer anderen Ausführungsform kann an jeder Außenfläche zumindest ein solcher Positionsblock eine in der Einführrichtung vorangehende ebene Anschlagfläche aufweisen, die sich senkrecht zur Einführrichtung erstreckt und die flächig an einer ebenen Gegenanschlagfläche anliegt, die an der Innenkontur der jeweiligen Lageraufnahme ausgebildet ist. Durch das Zusammenspiel der jeweiligen Anschlagfläche mit der zugehörigen Gegenanschlagfläche wird die Einführtiefe der Lagerkonsole definiert bzw. auf eine vorbestimmte Einführtiefe begrenzt. Folglich wird hierdurch die Lagerkonsole bezüglich der Einführrichtung ausgerichtet. Mit anderen Worten, durch das Zusammenwirken von Anschlagfläche und Gegenanschlagfläche wird die mit Hilfe der Lagerkonsole definierte Drehachse bezüglich der Einführrichtung zentriert.

Gemäß einem zweiten Aspekt der vorliegenden Erfindung kann das zugrunde liegende Problem auch dadurch gelöst werden, dass zumindest eine solche Lagerkonsole in wenigstens zwei Lagerteile unterteilt wird. Die jeweilige Lagerkonsole weist also ein erstes Lagerteil und ein zweites Lagerteil auf. Bevorzugt weist die Lagerkonsole nur zwei Lagerteile auf, so dass sie zweiteilig konzipiert ist. Die wenigstens zwei Lagerteile der geteilten Lagerkonsole können dabei separate Bauteile bilden. Sie können jedoch auch beweglich miteinander verbunden sein, beispielsweise über ein Filmscharnier. Insbesondere können die Lagerteile der geteilten Lagerkonsole in einem gemeinsamen Spritzwerkzeug einstückig, also materialeinheitlich verbunden hergestellt sein. Wichtig ist, dass das erste Lagerteil relativ zum zweiten Lagerteil zumindest für den Zusammenbau der Lagerkonsole relativ zueinander beweglich ist.

Gemäß dem zweiten Aspekt beruht die Erfindung auf dem allgemeinen Gedanken, die beiden Lagerteile an ebenen Positionierflächen aneinander flächig abzustützen, wodurch eine vorbestimmte Ausrichtung der beiden Lagerteile relativ zueinander vergleichsweise exakt realisiert werden kann. Hierdurch lässt sich die Steuerwelle innerhalb der Lagerkonsole zuverlässig drehbar lagern. Insbesondere kann eine unzulässig hohe radiale Verpressung der Steuerwelle in der Lagerkonsole vermieden werden, was bei nicht optimal ausgerichteten Lagerteilen leicht der Fall sein kann. Insoweit führt auch der zweite Aspekt zu einem vereinfachten Aufbau und insbesondere zu einer verbesserten Wellenlagerung mit erhöhter Funktionssicherheit.

Im Einzelnen schlägt der zweite Aspekt vor, das erste Lagerteil mit einem ersten Lagerabschnitt auszustatten, der einen ersten Umfangsabschnitt definiert, an dem die Steuerwelle flächig anliegt, während das zweite Lagerteil einen dem ersten Lagerabschnitt gegenüberliegenden zweiten Lagerabschnitt aufweist, der einen dem ersten Umfangsabschnitt gegenüberliegenden zweiten Umfangsabschnitt definiert, an dem die Steuerwelle flächig anliegt. Ferner weisen die beiden Lagerteile je eine Innenfläche auf, die bezüglich der bereits vorstehend zum ersten Aspekt genannten Querrichtung, die im Wesentlichen senkrecht zur Drehachse und im Wesentlichen senkrecht zur Einführrichtung verläuft, einander zugewandt sind und die jeweils wenigstens eine ebene Positionierfläche aufweisen, die sich im Wesentlichen senkrecht zur Querrichtung erstrecken. Wie erwähnt liegt wenigstens eine solche Positionierfläche des ersten Lagerteils flächig an wenigstens einer solchen Positionierfläche des zweiten Lagerteils an.

Die vorstehenden Merkmale des zweiten Aspekts der vorliegenden Erfindung sowie die nachfolgend erläuterten Ausführungsformen zum zweiten Aspekt lassen sich beliebig mit den Merkmalen des ersten Aspekts sowie mit den vorstehend beschriebenen Ausführungsformen des ersten Aspekts kombinieren.

Gemäß einer vorteilhaften Ausführungsform kann die jeweilige Positionierfläche von der jeweiligen Innenfläche erhaben sein, also dazu in der Querrichtung beabstandet sein. Hierdurch kann erreicht werden, dass sich die beiden Lagerteile im Bereich der einander zugewandten Innenflächen ausschließlich an den Positionierflächen berühren. Hierdurch wird nicht ausgeschlossen, dass die beiden Lagerteile beispielsweise über ein Filmscharnier miteinander verbunden sind und/oder im Bereich der Lagerabschnitte grundsätzlich auch aneinander anliegen können.

Gemäß einer anderen vorteilhaften Ausführungsform kann vorgesehen sein, dass an den beiden Lagerteilen an der jeweiligen Innenfläche jeweils wenigstens zwei solche Positionierflächen ausgebildet sind, was eine optimale Ausrichtung der beiden Lagerteile zueinander verbessert. Zweckmäßig können die beiden Positionierflächen des jeweiligen Lagerteils in der Einführrichtung voneinander beabstandet sein. Ebenso ist denkbar, die beiden Positionierflächen an der jeweiligen Innenfläche in der Längsrichtung voneinander beabstandet vorzusehen. Ebenso ist denkbar, dass mehr als zwei, beispielsweise drei oder vier oder mehr derartige Positionierflächen an der jeweiligen Innenfläche vorgesehen sind, wobei insbesondere vorgesehen sein kann, dass zumindest zwei solche Positionierflächen in der Einführrichtung und zwei solche Positionierflächen in der Längsrichtung voneinander beabstandet sind. Eine Beabstandung in der Längsrichtung wird dann vorgesehen, wenn die jeweilige Lagerkonsole in der Längsrichtung vergleichsweise groß oder breit bauen soll.

Bei einer anderen Ausführungsform kann das erste Lagerteil an seiner Innenfläche wenigstens einen in der Querrichtung abstehenden Führungsstift aufweisen, während das zweite Lagerteil an seiner Innenfläche wenigstens eine in der Querrichtung orientierte, zum zugehörigen Führungsstift komplementäre Führungsöffnung aufweist, in die der zugehörige Führungsstift in der Querrichtung eingesteckt ist. Durch den mit der jeweiligen Führungsöffnung zusammenwirkenden Führungsstift wird ebenfalls eine vorgegebene Ausrichtung der beiden Lagerteile relativ zueinander erreicht. Außerdem können Führungsstift und Führungsöffnung bei entsprechender Passung, bei der es sich bevorzugt um eine Presspassung handelt, eine hinreichende Fixierung der beiden Lagerteile aneinander erreicht werden. Ein derartiger Führungsstift kann bevorzugt integral am jeweiligen Lagerteil ausgeformt sein, also damit materialeinheitlich hergestellt sein.

Gemäß einer vorteilhaften Weiterbildung kann der jeweilige Führungsstift von der jeweiligen Positionierfläche eingefasst sein, so dass der jeweilige Führungsstift innerhalb der Positionierfläche von dem jeweiligen Lagerteil absteht. Ebenfalls kann die jeweilige Führungsöffnung von der jeweiligen Positionierfläche eingefasst sein. In diesem Fall ist die Führungsöffnung innerhalb der Positionierfläche in das jeweilige Lagerteil eingebracht. Hierdurch ergibt sich eine besonders kompakte Bauform für die Lagerkonsole.

Bei einer anderen vorteilhaften Ausführungsform kann das erste Lagerteil zumindest zwei derartige Führungsstifte aufweisen, die in der Einführrichtung und/oder in der Längsrichtung voneinander beabstandet sind. Das zweite Lagerteil weist dann komplementär zu den Führungsstiften zumindest zwei solche Führungsöffnungen auf, die ebenfalls in der Einführrichtung und/oder in der Längsrichtung voneinander beabstandet sind. Auch diese Maßnahme führt zu einer Verbesserung der Ausrichtung der beiden Lagerteile zueinander. Ebenso lässt sich dadurch auch eine in der Längsrichtung groß bauende Lagerkonsole realisieren.

Ferner kann vorgesehen sein, dass auch das zweite Lagerteil wenigstens einen Führungsstift aufweist, der in eine am ersten Lagerteil ausgebildete Führungsöffnung eingesteckt ist. Bevorzugt sind die Führungsstifte jedoch ausschließlich am ersten Lagerteil ausgebildet, während die Führungsöffnungen ausschließlich am zweiten Lagerteil ausgebildet sind.

Gemäß einer anderen vorteilhaften Ausführungsform kann der erste Umfangsabschnitt oder der zweite Umfangsabschnitt größer als 180° sein, so dass die in den zugehörigen Lagerabschnitt eingesetzte Lagerwelle darin geklammert ist.

Zweckmäßig ist der am ersten Lagerteil ausgebildete erste Lagerabschnitt so geformt, dass der erste Umfangsabschnitt größer als 180° ist. Der größere Umfangsabschnitt erstreckt sich beispielsweise über maximal 240° und kann beispielsweise etwa 200° betragen.

Eine weitere Ausführungsform ergibt sich, wenn in der Umfangsrichtung zwischen dem ersten Lagerabschnitt und dem zweiten Lagerabschnitt jeweils ein Spalt vorgesehen ist. Hierdurch lässt sich durch die Kontaktierung der Positionierflächen aneinander eine Ausrichtung der beiden Lagerabschnitte relativ zueinander realisieren.

Besonders vorteilhaft ist eine Ausführungsform, bei der sich die Lagerteile im Bereich der Lagerabschnitte nicht berühren. Hierdurch ist eine optimale Ausrichtung der Lagerabschnitte relativ zueinander durch das Zusammenwirken der aneinander anliegenden Positionierflächen möglich. Auch wird dadurch eine funktionale Trennung innerhalb der Lagerkonsole erreicht, da die Positionierfläche die Lagerabschnitte relativ zueinander ausrichten, während die Lagerabschnitte die Lagerung der Steuerwelle bewirken.

Eine andere Ausführungsform sieht vor, dass die beiden Lagerabschnitte nicht gleich groß sind, also verschieden große Umfangsabschnitte definieren. Das Lagerteil mit dem größeren Lagerabschnitt weist seitlich an seiner Innenfläche einen den Lagerabschnitt in der Umfangsrichtung vergrößernden Vorsprung auf. Das Lagerteil mit dem kleineren Lagerabschnitt weist seitlich an seiner Innenfläche einen den Lagerabschnitt in der Umfangsrichtung verkleinernden Rücksprung auf, in den der Vorsprung eingreift. Hierdurch ergibt sich eine besonders kompakte Bauform.

Gemäß einer vorteilhaften Weiterbildung kann vorgesehen sein, dass sich die beiden Lagerteile im Bereich des Vorsprungs und des Rücksprungs nicht berühren. Auch diese Maßnahme vereinfacht eine Ausrichtung der beiden Lagerabschnitte relativ zueinander, wenn die Positionierflächen aneinander zur Anlage kommen.

Besonders vorteilhaft ist eine Ausführungsform, bei der die Positionierflächen in einer Positionsebene aneinander anliegen, in der auch die Drehachse liegt. Somit lässt sich mit Hilfe der aneinander anliegenden Positionsfläche die Drehachse zentrieren.

Nachfolgend wird eine weitere vorteilhafte Ausführungsform mit zugehöriger Weiterbildung näher beschrieben, die sich beliebig mit den Merkmalen des weiter oben beschriebenen ersten Aspekts und dessen Ausführungsformen sowie beliebig mit den Merkmalen des vorstehend beschriebenen zweiten Aspekts und dessen Ausführungsformen kombinieren lassen.

Besagte weitere Ausführungsform geht davon aus, dass der Flanschabschnitt an seiner Anschlussseite mit wenigstens einer Dichtungsnut zur Aufnahme einer Dichtung ausgestattet ist, wobei die Dichtung im an die Brennkraftmaschine angeschlossenen Zustand des Gehäuses an der Brennkraftmaschine dichtend anliegt. Gemäß besagter Ausführungsform wird nun vorgeschlagen, zumindest eine solche Lageraufnahme in einem Abschnitt der Dichtungsnut anzuordnen, derart, dass die Dichtungsnut im Bereich dieser Lageraufnahme eine Nutunterbrechung besitzt. Ferner wird vorgeschlagen, dass zumindest eine solche Lagerkonsole im Bereich der Dichtungsnut einen Nutabschnitt aufweist, der die Dichtungsnut im Bereich der vorgenannten Nutunterbrechung komplettiert. Auf diese Weise kann der an der jeweiligen Lagerkonsole ausgebildete Nutabschnitt die daran anschließende Dichtungsnut quasi unterbrechungsfrei und vorzugsweise bündig ergänzen, so dass im montierten Zustand die darin eingesetzte Dichtung unterbrechungsfrei geführt werden kann. Diese Maßnahme hat den Vorteil, dass insbesondere zwischen benachbarten Auslassöffnungen ein Abstand in der Längsrichtung besonders klein gewählt werden kann. Insbesondere lässt sich die Steuerwelle durch eine derartige Lageraufnahme auch im Bereich der Dichtung einsetzen. Ein weiterer Vorteil dieser Ausführungsform wird darin gesehen, dass die in die Lageraufnahme eingesetzte Lagerkonsole mit Hilfe der Dichtung am Flanschabschnitt verliersicher gehalten ist, nämlich mittels des durch den Nutabschnitt hindurchgeführten Dichtungsabschnitts. Hierdurch lässt sich das Saugmodul weitgehend komplett als Baugruppe vorbereiten, was deren Montage an der Brennkraftmaschine vereinfacht. Im angebauten Zustand erzeugt die Verpressung der Dichtung eine Vorspannkraft, welche die Lagerkonsole in der Einführrichtung in die Lageraufnahme antreibt, was ebenfalls eine sichere Positionierung der Lagerkonsole relativ zum Gehäuse unterstützt.

Gemäß einer vorteilhaften Weiterbildung kann zumindest ein solcher Positionsblock eine von der Steuerwelle abgewandte Haltefläche aufweisen, die bündig an einen Nutgrund des Nutabschnitts anschließt. Auf diese Weise bildet auch der jeweilige Positionsblock mit seiner Haltefläche einen Abschnitt des Nutgrunds der Dichtungsnut, was auch hier eine vereinfachte Montage bzw. eine verbesserte Positionierung der Lagerkonsole im Flanschabschnitt ermöglicht.

In einer bevorzugten Ausführungsform ist die Lagerkonsole als Kunststoffspritzgussteil ausgebildet. Die üblichen Entformungsschrägen, zur Entnahme des fertigen Kunststoffteils aus dem Spritzgusswerkzeug, sind an den nicht zur Positionierung vorgesehenen Außenflächen wie allgemein üblich angeordnet. An den zur Positionierung der Lagerkonsole im Saugmodul bzw. an den beiden Lagerteilen erforderlichen Positionierungsflächen bzw. Führungsstifte sind keine Entformungsschrägen vorgesehen. Somit sind diese Flächen sehr präzise herstellbar und können somit auch eine sehr exakte Lagerung ermöglichen. Der Anteil der Positionierungsoberflächen beträgt weniger als 20%, insbesondere weniger als 10% der gesamten Bauteiloberfläche. Aufgrund des geringen Anteils an der Gesamtoberfläche ist trotzdem ein problemloses Entnehmen der gespritzten Lagerkonsolen aus dem Werkzeug möglich.

Für beide vorstehend beschriebenen Aspekte kann gemäß einer vorteilhaften Ausführungsform vorgesehen sein, dass das Gehäuse zumindest eine Einlassöffnung für Frischluft und einen Flanschabschnitt aufweist, der die steuerbaren Öffnungen aufweist, die dort Auslassöffnungen für Frischluft bilden. Zusätzlich oder alternativ kann vorgesehen sein, dass die Lageraufnahmen an einer für ein Anschließen des Gehäuses an die Brennkraftmaschine vorgesehenen Anschlussseite des Flanschabschnitts ausgebildet sind.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine stark vereinfachte, schaltplanartige Prinzipdarstellung einer Brennkraftmaschine mit einer Frischluftanlage, die ein Saugmodul aufweist,
- Fig. 2: eine Ansicht von unten auf das Saugmodul,
- Fig. 3 bis 5: jeweils eine isometrische Ansicht auf eine Lagerkonsole in einem aufgeklappten Zustand, bei verschiedenen Ausführungsformen,
- Fig. 6 und 7: jeweils eine isometrische Ansicht auf die Lagerkonsole in einem zusammengeklappten Zustand, bei den in den Fig. 4 und 5 gezeigten Ausführungsformen,
- Fig. 8: ein Querschnitt des Saugmoduls im Bereich einer Lagerkonsole, wobei ein Gehäuse des Saugmoduls geschnitten dargestellt ist, während die Lagerkonsole in einer Seitenansicht wiedergegeben ist.

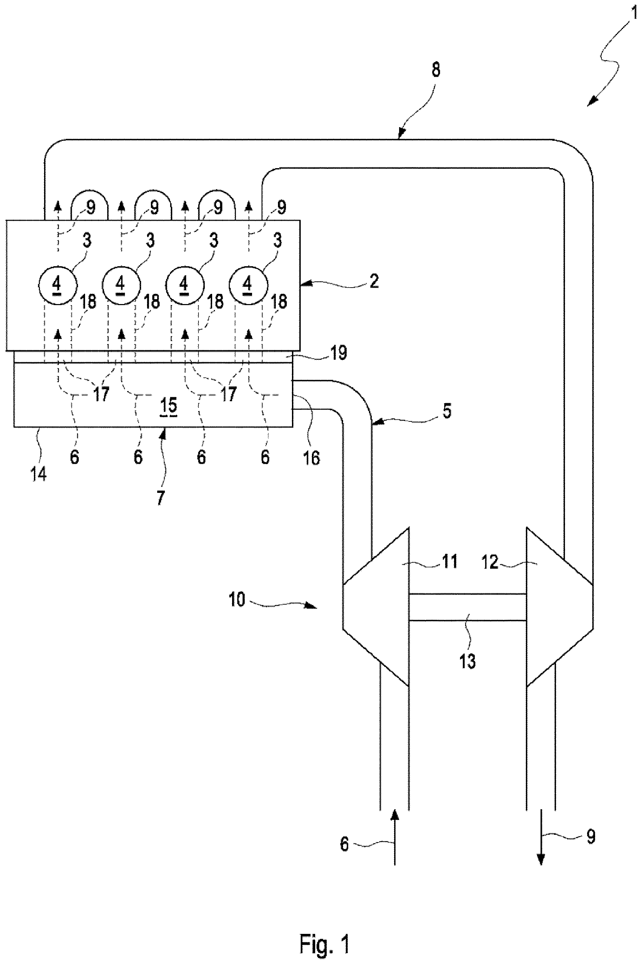

Entsprechend Fig. 1 umfasst eine Brennkraftmaschine 1 einen Motorblock 2, der mehrere Zylinder 3 aufweist, in denen jeweils ein Brennraum 4 der Brennkraftmaschine 1 enthalten ist. Rein exemplarisch und ohne Beschränkung der Allgemeinheit sind hier vier Zylinder dargestellt. Bei einer als Kolbenmotor ausgestalteten Brennkraftmaschine 1 ist in jedem Zylinder 3 ein hier nicht gezeigter Kolben hubverstellbar angeordnet. Über eine Frischluftanlage 5 wird den Brennräumen 4 Frischluft zugeführt. Eine entsprechende Frischluftströmung 6 ist durch Pfeile angedeutet. Die Frischluftanlage 5 ist über ein Saugmodul 7 an die Brennkraftmaschine 1 bzw. an den Motorblock 2 angeschlossen bzw. daran befestigt. Ferner ist eine Abgasanlage 8 vorgesehen, über die Verbrennungsabgase aus den Brennräumen 4 abgeführt werden können. Ein entsprechender Abgasstrom 9 ist durch Pfeile angedeutet.

Im gezeigten Beispiel der Fig. 1 handelt es sich bei der Brennkraftmaschine 1 um eine aufgeladene Brennkraftmaschine 1, da sie mit einer Ladeeinrichtung 10 ausgestattet ist, bei der es sich im Beispiel um einen Abgasturbolader handelt, der im Folgenden ebenfalls mit 10 bezeichnet werden kann. Der Abgasturbolader 10 weist in üblicher Weise einen Verdichter 11 auf, der in die Frischluftanlage 5 eingebaut ist, sowie eine Turbine 12, die in die Abgasanlage 8 eingebaut ist. Verdichter 11 und Turbine 12 sind zum Beispiel durch eine gemeinsame Antriebswelle 13 miteinander antriebsverbunden. Alternativ kann die Brennkraftmaschine 1 auch als nicht aufgeladene Brennkraftmaschine 1, also als Saugmotor konzipiert sein.

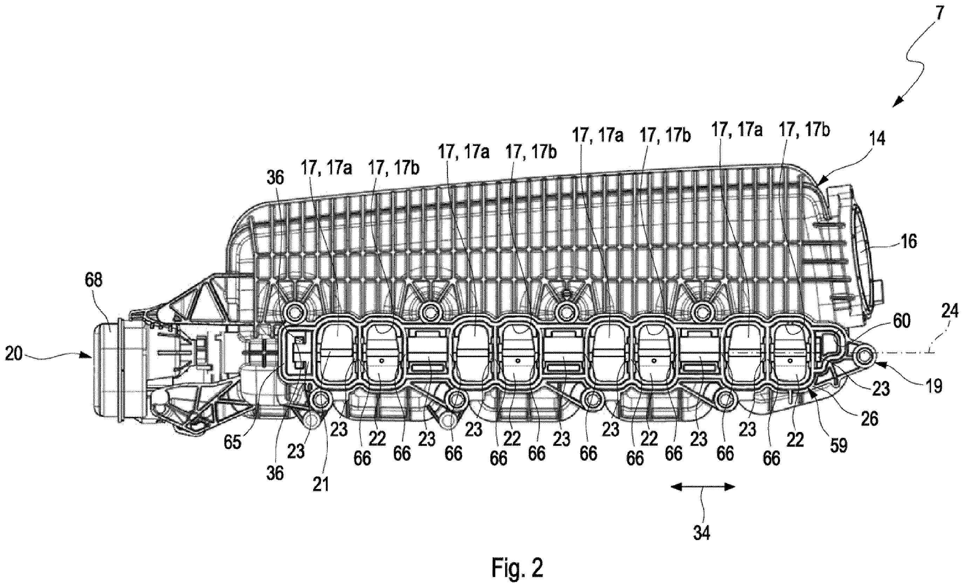

Gemäß den Fig. 1 und 2 besitzt das Saugmodul 7 ein Gehäuse 14, das einen Verteilerraum 15 umschließt. Das Gehäuse 2 weist eine Einlassöffnung 16 sowie mehrere Auslassöffnungen 17 auf. Durch die Einlassöffnung 16 kann der Frischluftstrom 6 in den Verteilerraum 15 eintreten. Durch die Auslassöffnungen 17 kann der Frischluftstrom 6 aus dem Verteilerraum 15 austreten und über entsprechende, im Motorblock 2 ausgebildete Frischluftkanäle 18 in den jeweiligen Brennraum 4 strömen. Gaswechselventile zum Steuern von Gaswechselvorgängen sind hier nicht dargestellt.

Das Gehäuse 14 besitzt einen Flanschabschnitt 19, mit dem das Gehäuse 14 bzw. das Saugmodul 7 am Motorblock 2 befestigt bzw. an die Brennkraftmaschine 1 angeschlossen werden kann. Zweckmäßig ist der Flanschabschnitt 19 integral am Gehäuse 14 ausgeformt, also materialeinheitlich damit hergestellt. Entsprechend Fig. 2 ist das Saugmodul 7 außerdem mit einer Steuereinrichtung 20 ausgestattet, mit deren Hilfe zumindest bei einer der Auslassöffnungen 17 der durchströmbare Querschnitt gesteuert werden kann. Es ist klar, dass bei einer anderen Ausführungsform der durchströmbare Querschnitt einer beliebigen anderen Öffnung mittels der Steuereinrichtung 20 gesteuert werden kann, so dass die nachfolgende Beschreibung entsprechend auch auf ein Saugmodul 7 mit anderen steuerbaren Öffnungen lesbar ist.

Im Beispiel der Fig. 2 sind jedem Zylinder 3 bzw. jedem Brennraum 4 zwei Auslassöffnungen 17 zugeordnet, wobei mit Hilfe der Steuereinrichtung 20 jeweils nur eine dieser beiden Auslassöffnungen 17 gesteuert werden kann, während die jeweils andere Auslassöffnung 17 ungesteuert ist, also permanent offen ist. Die ungesteuerten Auslassöffnungen 17 sind in Fig. 2 außerdem mit 17a bezeichnet. Die mit Hilfe der Steuereinrichtung 20 steuerbaren bzw. gesteuerten Auslassöffnungen 17 sind in Fig. 2 außerdem mit 17b bezeichnet. Die Steuereinrichtung 20 weist zumindest eine Steuerwelle 21 auf, die für wenigstens eine gesteuerte Auslassöffnung 17b eine Steuerklappe 22 trägt, die drehfest an der Steuerwelle 21 angeordnet ist. Zum drehenden Antreiben der Steuerwelle 21 ist ein entsprechender Stellantrieb 68 vorgesehen. Im Beispiel der Fig. 2 ist für sämtliche steuerbaren Auslassöffnungen 17b eine einzige, gemeinsame Steuerwelle 21 vorgesehen, die für alle steuerbaren Auslassöffnungen 17b jeweils eine Steuerklappe 22 trägt. Während die Steuerwelle 21 zweckmäßig aus einem Metall hergestellt ist, sind die Steuerklappen 22 bevorzugt aus einem Kunststoff hergestellt, wobei die Steuerklappen 22 unmittelbar an die Steuerwelle 21 angespritzt sein können.

Die Steuerwelle 21 ist mittels mehrerer Lagerkonsolen 23 am Gehäuse 14 um eine Drehachse 24 drehbar gelagert. Die Steuerwelle 21 ist zweckmäßig geradlinig ausgeführt, so dass sich die Drehachse 24 konzentrisch zur Steuerwelle 21 erstreckt.

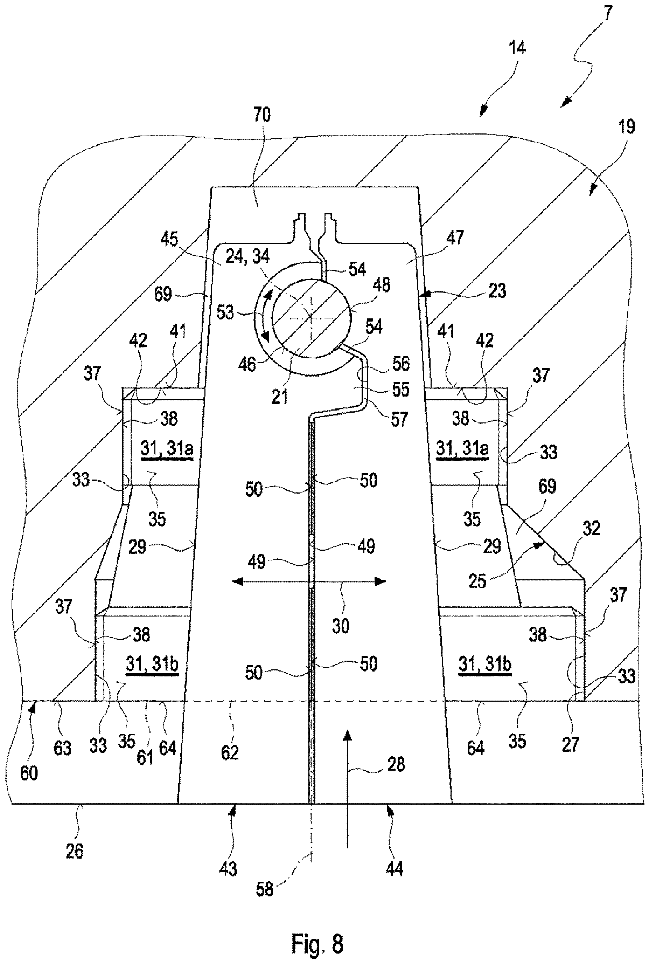

In Fig. 8 ist ein vereinfachter Querschnitt des Saugmoduls 7 durch das Gehäuse 14 im Bereich des Flanschabschnitts 19 senkrecht zur Drehachse 24 wiedergegeben, und zwar im Bereich einer solchen Lagerkonsole 23, wobei die Lagerkonsole 23 selbst nicht geschnitten dargestellt ist, sondern in einer Seitenansicht, deren Blickrichtung parallel zur Drehachse 24 verläuft. Erkennbar weist das Gehäuse 14 im Bereich des Flanschabschnitts 19 für jede Lagerkonsole 23 eine zugehörige Lageraufnahme 25 auf. Die jeweilige Lageraufnahme 25 weist an einer Anschlussseite 26 des Flanschabschnitts 19 eine Einführöffnung 27 auf, so dass die jeweilige Lageraufnahme 25 an der Anschlussseite 26 offen ist. Die Anschlussseite 26 dient zum Anschließen des Gehäuses 14 an die Brennkraftmaschine 1 bzw. an deren Motorblock 2, wobei die Anschlussseite 26 dem Motorblock 2 zugewandt ist bzw. an einer vom Gehäuse 14 abgewandten Seite des Anschlussflansches 19 angeordnet ist. Die jeweilige Lagerkonsole 23 ist in einer durch einen Pfeil angedeuteten Einführrichtung 28 durch die Einführöffnung 27 hindurch in die Lageraufnahme 25 eingeführt. Die Einführrichtung 28 ist dabei senkrecht zur Drehachse 24 orientiert.

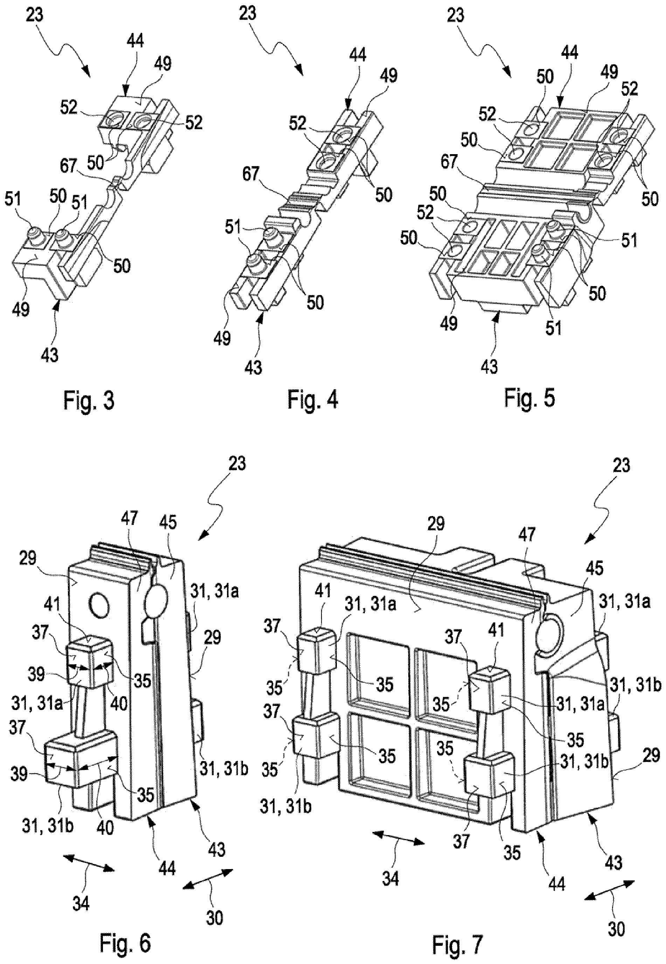

Gemäß den Fig. 6 bis 8 weist die jeweilige Lagerkonsole 23 an ihrer Außenseite zwei Außenflächen 29 auf, die bezüglich einer in den Fig. 6 bis 8 durch einen Doppelpfeil angedeuteten Querrichtung 30 voneinander abgewandt sind. Die Querrichtung 30 verläuft senkrecht zur Drehachse 24 und senkrecht zur Einführrichtung 28. An jeder dieser beiden Außenflächen 29 weist die Lagerkonsole 23 jeweils zumindest einen von der jeweiligen Außenfläche 29 abstehenden Positionsblock 31 auf. Komplementär zu den Positionsblöcken 31 weist die Lageraufnahme 25 an ihrer Innenseite 32 eine Führungskontur 33 zum Ausrichten der Lagerkonsole 23 bezüglich der Querrichtung 30 und bezüglich einer Längsrichtung 34 auf, die in den Fig. 6 und 7 jeweils durch einen Doppelpfeil angedeutet ist und die sich parallel zur Drehachse 24 erstreckt. Der jeweilige Positionsblock 31 weist zwei bezüglich der Längsrichtung 34 voneinander abgewandte ebene Längspositionierflächen 35 auf, die sich parallel zueinander und senkrecht zur Längsrichtung 34 erstrecken. In den Fig. 6 bis 8 sind dabei jeweils nur die dem Betrachter zugewandten Längspositionierflächen 35 erkennbar. Die vom Betrachter abgewandten Längspositionierflächen 35 sind in Fig. 7 mit unterbrochenen Bezugslinien angedeutet.

Die Lageraufnahme 25 bzw. die jeweilige Führungskontur 33 besitzt an der Innenseite 32 für den jeweiligen Positionsblock 31 zwei ebene Längsführungsflächen 36, die lediglich in Fig. 2 erkennbar sind. Die Längsführungsflächen 36 sind bezüglich der Längsrichtung 34 einander zugewandt und erstrecken sich parallel zueinander sowie senkrecht zur Längsrichtung 34. Im eingebauten Zustand liegen die Längspositionierflächen 35 des jeweiligen Positionsblocks 31 flächig an der jeweiligen Längsführungsfläche 36 flächig an.

Des Weiteren ist der jeweilige Positionsblock 31 hier mit einer ebenen Querpositionierfläche 37 ausgestattet, die sich senkrecht zur Querrichtung 30 erstreckt und dabei bezüglich der Querrichtung 30 von der übrigen Lagerkonsole 23 abgewandt ist. Komplementär zu diesen Querpositionierflächen 37 weist die Lageraufnahme 25 an ihrer Innenseite 32 bzw. an ihrer Führungskontur 33 für den jeweiligen Positionsblock 31 eine ebene Querführungsfläche 38 auf, die sich senkrecht zur Querrichtung 30 erstreckt und an der die jeweilige Querpositionierfläche 37 des jeweiligen Positionsblocks 31 flächig anliegt. Während die zuvor genannten Längspositionierflächen 35 mit den Längsführungsflächen 36 eine Ausrichtung der Lagerkonsole 23 bezüglich der Längsrichtung 34 bewirken, erzeugen die Querpositionierflächen 37 in Verbindung mit den Querführungsflächen 38 eine Ausrichtung der Lagerkonsole 23 bezüglich der Querrichtung 30.

Bei den hier gezeigten Beispielen weist die jeweilige Lagerkonsole 23 auf jeder ihrer beiden Außenflächen 29 zumindest zwei derartige Positionsblöcke 31 auf, die in der Einführrichtung 28 voneinander beabstandet sind. Dementsprechend kann zur Unterscheidung der beiden Positionsblöcke 31 der beim Einführen der Lagerkonsole 23 in die Lageraufnahme 25 vorausgehende Positionsblock 31 im Folgenden als vorangehender oder vorausgehender Positionsblock 31a bezeichnet werden, während der beim Einführen nachfolgende Positionsblock 31 im Folgenden auch als nachfolgender Positionsblock 31b bezeichnet werden kann. Zweckmäßig sind die beiden Positionsblöcke 31a, 31b an der jeweiligen Außenfläche 29 in der Einführrichtung 28 zueinander fluchtend angeordnet. Dabei ist der vorausgehende Positionsblock 31a kleiner dimensioniert als der nachfolgende Positionsblock 31b. Zweckmäßig ist der kleinere vorausgehende Positionsblock 31a sowohl in der Längsrichtung 34 als auch in der Querrichtung 30 kleiner dimensioniert als der größere, nachfolgende Positionsblock 31b. Beispielsweise ist gemäß Fig. 6 ein Längsabstand 39, den die beiden Längspositionierflächen 35 des jeweiligen Positionsblocks 31 voneinander besitzen, beim vorausgehenden Positionsblock 31a kleiner als beim nachfolgenden Positionsblock 31b. Ferner ist auch ein parallel zur Querrichtung 30 gemessener Querabstand 40 der jeweiligen Querpositionierfläche 37 von der zugehörigen Außenfläche 29, von welcher der jeweilige Positionsblock 31 absteht, beim vorausgehenden Positionsblock 31a kleiner als beim nachfolgenden Positionsblock 31b.

Bei den hier gezeigten Ausführungsformen ist der vorausgehende Positionsblock 31a bezüglich der Einführrichtung 28 zwischen der Steuerwelle 21 und dem nachfolgenden Positionsblock 31b angeordnet, wodurch die Steuerwelle 21 einen besonders großen Abstand von der Anschlussseite 26 erreichen kann, was einer großen Eindringtiefe entspricht. Dies ist zur Realisierung vergleichsweise großer Steuerklappen 22 von Vorteil.

Während die in Fig. 6 gezeigte Ausführungsform der Lagerkonsole 23 auf jeder Außenseite 29 nur zwei Positionsblöcke 31 aufweist, sind bei der in Fig. 7 gezeigten Ausführungsform auf jeder Außenseite 29 vier derartige Positionsblöcke 31 vorgesehen. Somit sind an der jeweiligen Außenfläche 29 zumindest zwei derartige Positionsblöcke 31 in der Längsrichtung 34 voneinander beabstandet. Im Einzelnen sind zwei in der Längsrichtung 34 voneinander beabstandete vorausgehende kleinere Positionsblöcke 31a und zwei nachfolgende größere Positionsblöcke 31b vorgesehen.

Des Weiteren ist bei den hier vorgestellten Lagerkonsolen 23 vorgesehen, dass zumindest bei einem der Positionsblöcke 31, nämlich jeweils beim vorausgehenden Positionsblock 31a, eine in der Einführrichtung 28 vorangehende ebene Anschlagfläche 41 ausgebildet ist, die sich senkrecht zur Einführrichtung 28 erstreckt. Komplementär dazu besitzt die Lageraufnahme 25 an ihrer Innenseite 32 für den jeweiligen Positionsblock 31, hier für den jeweiligen vorausgehenden Positionsblock 31a, eine ebene Gegenanschlagfläche 42, an welcher die Anschlagfläche 41 flächig anliegt, sobald die Lagerkonsole 23 eine vorbestimmte Einstecktiefe in der Lageraufnahme 25 erreicht hat.

Den Fig. 6 bis 8 lässt sich ebenfalls entnehmen, dass die jeweilige Lagerkonsole 23 an ihren Außenflächen 29 ausschließlich über diese Positionsblöcke 31 mit dem Gehäuse 14 in Kontakt steht. Hierdurch wird erreicht, dass die Positionierung der Lagerkonsole 23 relativ zum Gehäuse 14 in der Längsrichtung 34 und in der Querrichtung 30 ausschließlich über diese Positionierblöcke 31 erfolgt. Erkennbar sind die Positionierblöcke 31 im Vergleich zur gesamten Lagerkonsole 23 relativ klein dimensioniert. Sofern wie in dem in Fig. 8 gezeigten Beispiel der Kontakt im Bereich der Außenflächen 29 nur mittelbar, nämlich über die Positionsblöcke 31 erfolgt, ist außerhalb der Positionsblöcke 31 in der Querrichtung 30 und/oder in der Längsrichtung 34 zwischen den Außenflächen 29 der jeweiligen Lagerkonsole 23 und der Innenseite 32 der zugehörigen Lageraufnahme 25 ein Zwischenraum oder Spalt ausgebildet. In Fig. 8 sind auf beiden Außenseiten der Lagerkonsole 23 außerhalb der Positionierblöcke 31 in der Querrichtung 30 solche Zwischenräume vorhanden, die mit 69 bezeichnet sind. Ferner ist erkennbar, dass die Lagerkonsole 23 außerhalb der Positionierblöcke 31 auch in der Einführrichtung 28 zwischen dem vorausgehenden vorderen Ende und einer gegenüberliegenden, die Lageraufnahme 25 begrenzenden Wand des Gehäuses 14 keinen direkten Kontakt zum Gehäuse 14 besitzt, so dass sich auch an dieser Stelle ein Zwischenraum 70 befindet.

Vorteilhaft ist bei den hier gezeigten Beispielen der Fig. 3 bis 8 außerdem vorgesehen, dass der jeweilige Positionsblock 31 eine parallel zur Längsrichtung 34 gemessene Länge aufweist, die kleiner ist als eine parallel zur Längsrichtung 34 gemessene Länge der Lagerkonsole 23. Erkennbar ist der Positionsblock 31 in der Längsrichtung 34 maximal halb so lang wie die Lagerkonsole 23. Zusätzlich ist hier vorgesehen, dass der jeweilige Positionsblock 31 eine parallel zur Einführrichtung 28 gemessene Höhe aufweist, die kleiner ist als eine parallel zur Längsrichtung gemessene Höhe der Lagerkonsole 23. Insbesondere ist der Positionsblock 31 hier maximal halb so hoch wie die Lagerkonsole 23.

Ferner ist hier noch vorgesehen, dass der jeweilige Positionsblock 31 von zwei in der Längsrichtung 34 voneinander entfernten Längsenden der Lagerkonsole 23 jeweils beabstandet ist. Zusätzlich ist hier vorgesehen, dass der jeweilige Positionsblock 31 von zwei in der Einführrichtung 28 voneinander entfernten Enden der Lagerkonsole 23 jeweils beabstandet ist. Beim Einsetzen der Lagerkonsole 23 in die Lageraufnahme 25 geht eines dieser Enden in der Einführrichtung 28 vorraus und bildet ein vorderes Ende der Lagerkonsole 23, während das andere Ende in der Einführrichtung 28 nacheilt und ein hinteres Ende der Lagerkonsole 23 bildet. Durch die Beabstandung des jeweiligen Positionierblocks 31 von den jeweiligen Enden der Lagerkonsole 23 ergibt sich eine deutlich kleinere Dimensionierung für den Positionierblock 31, die es ermöglicht, dort enge Toleranzen einzuhalten.

Zweckmäßig ist der jeweilige Positionsblock 31 quaderförmig ausgestaltet, so dass er zumindest vier außenliegende vorzugsweise ebene Führungsflächen besitzt, nämlich eine quer zur Querrichtung 30 verlaufende Führungsfläche 37, die von der Lagerkonsole 23 abgewandt ist, eine quer zur Einführrichtung 28 verlaufende Führungsfläche 41, die in der Einführrichtung 28 vorausgeht, und zwei quer zur Längsrichtung 34 verlaufende Führungsflächen 35, die voneinander abgewandt sind.

Zusätzlich oder alternativ zu den vorstehend beschriebenen Merkmalen besitzt die jeweilige Lagerkonsole 23 zwei Lagerteile, nämlich ein erstes Lagerteil 43 und ein zweites Lagerteil 44. Das erste Lagerteil 43 weist einen ersten Lagerabschnitt 45 auf, an dem die Steuerwelle 27 mit einem ersten Umfangsabschnitt 46 anliegt. Das zweite Lagerteil 44 weist einen zweiten Lagerabschnitt 47 auf, der dem ersten Lagerabschnitt 45 gegenüberliegt und an dem die Steuerwelle 21 mit einem zweiten Umfangsabschnitt 48 anliegt, der seinerseits dem ersten Umfangsabschnitt 46 gegenüberliegt. Beide Lagerteile 43, 44 weisen jeweils seitlich an den jeweiligen Lagerabschnitt 45, 47 anschließend eine Innenfläche 49 auf, die einander bezüglich der Querrichtung 30 zugewandt sind. An der jeweiligen Innenfläche 49 ist jeweils zumindest eine ebene Positionierfläche 50 ausgebildet, die sich jeweils senkrecht zur Querrichtung 30 erstreckt. Im zusammengeklappten Zustand der Fig. 6 bis 8 bzw. im Einbauzustand der Fig. 8, liegt die jeweilige Positionierfläche 50 des ersten Lagerteils 43 flächig an zumindest einer Positionierfläche 50 des zweiten Lagerteils 44 an. Hierdurch sind die beiden Lagerteile 43, 44 bezüglich der Querrichtung 30 optimal zueinander ausgerichtet.

Die Positionierflächen 50 der beiden Lagerteile 43, 44 liegen in einer Positionsebene 58 aneinander an. Zweckmäßig sind die Positionierflächen 50 dabei so an den Lagerteilen 43, 44 angeordnet, dass die durch die Lagerkonsole 43 definierte Drehachse 24 in der Positionsebene 58 liegt.

Gemäß den Fig. 3 bis 5 weist das erste Lagerteil 43 an seiner Innenfläche 49 zumindest einen in der Querrichtung 30 abstehenden Führungsstift 51 auf. Diese Führungsstifte 51 sind in zusammengeklappten Zustand der Fig. 6 bis 8 nicht erkennbar. Das jeweilige zweite Lagerteil 43 weist gemäß den Fig. 3 bis 5 an seiner Innenfläche 49 zumindest eine in der Querrichtung 30 orientierte Führungsöffnung 52 auf, die komplementär zum zugehörigen Führungsstift 51 geformt ist. Im zusammengeklappten Zustand der Fig. 6 bis 8 ist der jeweilige Führungsstift 51 in die zugehörige Führungsöffnung 52 in der Querrichtung 30 eingesteckt. Auch die Führungsöffnungen 52 sind in den Fig. 6 bis 8 nicht erkennbar.

Zweckmäßig erfolgt die Positionierung der Führungsstifte 51 an der jeweiligen Innenfläche 49 gezielt so, dass der jeweilige Führungsstift 51 von der jeweiligen Positionierfläche 50 eingefasst ist und insbesondere dazu zentriert ist. Dementsprechend sind auch die Positionieröffnungen 52 am zweiten Lagerteil 44 von der jeweiligen Positionierfläche 50 eingefasst und insbesondere dazu zentriert. Wie sich den Fig. 3 bis 5 und 8 entnehmen lässt, ist die jeweilige Positionierfläche 50 von der zugehörigen Innenfläche 49 erhaben, also dazu in der Querrichtung 30 beabstandet.

Bei den hier gezeigten Ausführungsformen sind an beiden Lagerteilen 43, 44 an der jeweiligen Innenfläche 49 jeweils zumindest zwei derartige Positionierflächen 50 ausgebildet, die in der Einführrichtung 28 und/oder in der Längsrichtung 34 voneinander beabstandet angeordnet sein können. Fig. 3 zeigt eine Ausführungsform, bei der das jeweilige Lagerteil 43, 44 genau zwei Positionierflächen 50 aufweist, die in der Längsrichtung 34 voneinander beabstandet sind und auch bezüglich der Längsrichtung 34 zueinander fluchtend angeordnet sind. Bei der in Fig. 4 gezeigten Ausführungsform sind an den beiden Lagerteilen 43, 44 ebenfalls jeweils nur zwei Positionierflächen 50 vorgesehen, die in diesem Fall jedoch in der Einsteckrichtung 28 voneinander beabstandet sind und in der Einführrichtung 28 auch zueinander fluchtend angeordnet sind. Fig. 5 zeigt dagegen ein Beispiel, bei der das jeweilige Lagerteil 43, 44 jeweils vier Positionierflächen 50 aufweist, wobei je zwei in der Einführrichtung 28 und je zwei in der Längsrichtung 34 voneinander beabstandet und zueinander fluchtend angeordnet sind. Bei den Beispielen der Fig. 3 bis 5 sind jeweils genau zwei Führungsstifte 51 und genau zwei Führungsöffnungen 52 vorgesehen.

Wie sich Fig. 8 besonders deutlich entnehmen lässt, ist bei den hier gezeigten Ausführungsformen der Lagersockel 23 jeweils der durch den ersten Lagerabschnitt 45 des ersten Lagerteils 43 definierte erste Umfangsabschnitt 46 größer als 180° und beträgt im Beispiel etwa 225°. Der durch den zweiten Lagerabschnitt 47 des zweiten Lagerteils 44 definierte zweite Umfangsabschnitt 48 ist dagegen kleiner als 180° und beträgt im gezeigten Beispiel etwa 120°. Hierdurch lässt sich die Steuerwelle 21 am ersten Lagerabschnitt 45 verclipsen, während der zweite Lagerabschnitt 47 im zusammengeklappten Zustand der Lagerkonsole 23 die Steuerwelle 21 im ersten Lagerabschnitt 45 sichert. Beim hier gezeigten Beispiel ist außerdem vorgesehen, dass die Summe aus erstem Umfangsabschnitt 46 und zweitem Umfangsabschnitt 48 kleiner ist als 360°. Ferner sind die beiden Lagerabschnitte 45, 47 relativ zueinander so positioniert, dass in der in Fig. 8 durch einen Doppelpfeil angedeuteten Umfangsrichtung 53 der Steuerwelle 21 zwischen dem ersten Lagerabschnitt 45 und dem zweiten Lagerabschnitt 47 jeweils ein Spalt 54 ausgebildet ist, so dass sich die Lagerteile 43, 44 im Bereich der Lagerabschnitte 45, 47 nicht berühren. Am ersten Lagerteil 53 ist im Bereich des ersten Lagerabschnitts 45 ein Vorsprung 55 ausgebildet, der den ersten Lagerabschnitt 45 in der Umfangsrichtung 53 vergrößert, so dass der Vorsprung 55 einen Teil des ersten Umfangsabschnitts 46 abdeckt bzw. definiert. Das zweite Lagerteil 44 besitzt im Bereich des zweiten Lagerabschnitts 47 einen Rücksprung 56, also eine Vertiefung oder Ausnehmung. Der Rücksprung 56 führt zu einer Reduzierung des zweiten Umfangsabschnitts 48. Ferner greift der Vorsprung 55 in diesen Rücksprung 56 ein. Die Positionierung des Vorsprungs 55 im Rücksprung 56 ist dabei so gestaltet, dass sich die beiden Lagerteile 43, 44 auch im Bereich des Vorsprungs 55 und des Rücksprungs 56 nicht berühren. Vielmehr ist auch dort ein Spalt 57 zwischen Vorsprung 55 und Rücksprung 56 ausgebildet.

Gemäß Fig. 2 ist der Flanschabschnitt 19 an seiner dem Betrachter zugewandten Anschlussseite 26 mit einer Dichtung 59 ausgestattet, mit deren Hilfe der Flanschabschnitt 19 bzw. das Gehäuse 14 im montierten Zustand gegenüber dem Motorblock 2 abgedichtet ist, um eine Leckage der den Brennräumen 4 zugeführten Frischluft in die Umgebung zu vermeiden. Zur Aufnahme der Dichtung 59 ist in die Anschlussseite 26 des Flanschabschnitts 19 eine komplementär zur Dichtung 59 geformte Dichtungsnut 60 eingearbeitet, von der auch in Fig. 8 ein Abschnitt erkennbar ist. Zweckmäßig kann nun vorgesehen sein, dass zumindest eine solche Lageraufnahme 25 in einem Abschnitt der Dichtungsnut 60 angeordnet ist, derart, dass die Dichtungsnut 60 im Bereich dieser Lageraufnahme 25 eine Nutunterbrechung 61 aufweist. Die in diese Lageraufnahme 25 eingesetzte Lagerkonsole 23 ist nun so ausgestaltet, dass sie im Bereich der Dichtungsnut 60 einen Nutabschnitt 62 aufweist, der die Dichtungsnut 60 im Bereich der Nutunterbrechung 61 komplettiert. Zweckmäßig ergänzt der an der Lagerkonsole 23 vorgesehene Nutabschnitt 62 die Dichtungsnut 60 im Bereich der Nutunterbrechung 61 vollständig, so dass die Dichtung 59 lückenlos an einem Nutgrund 63 der Dichtungsnut 60 zur Anlage kommen kann. Im Beispiel der Fig. 8 ist außerdem vorgesehen, dass die beiden nachfolgenden Positionsblöcke 31b jeweils eine von der Steuerwelle 21 abgewandte Haltefläche 64 aufweisen, die bündig an den Nutgrund 53 des Nutabschnitts 60 anschließen und dadurch selbst einen Abschnitt des Nutgrunds 63 der Dichtungsnut 60 bilden. Hierdurch ist es grundsätzlich möglich, auch im Bereich der Nutunterbrechung 61 einen durchgehenden Kontakt mit der Dichtung 59 herzustellen. Die Dichtung 59 weist gemäß Fig. 2 einen Umlauf 65 auf, der um sämtliche Auslassöffnungen 17 und um sämtliche Lageraufnahmen 25 herumgeführt ist, diese also einfasst bzw. einschließt. Innerhalb dieses Umlaufs 65 weist die Dichtung 59 mehrere Stege 66 auf, die jeweils durch eine Nutunterbrechung 61, also durch eine Lageraufnahme 25 hindurchgeführt sind und dort mit der zugehörigen Lagerkonsole 23 in Kontakt stehen. Dabei werden diese Stege 66 bei der Vormontage des Saugmoduls 7 dazu genutzt, die in die Lageraufnahmen 25 eingesetzten Lagerkonsolen 23 am Flanschabschnitt 19 zu sichern. Im angebauten Zustand der Sauganlage 7 bewirken die Stege 66 eine Vorspannung der Lagerkonsolen 23 in der Einführrichtung 28, wodurch die Lagerkonsolen 23 insbesondere mit ihren Anschlagflächen 41 vorgespannt an den Gegenanschlagflächen 42 zur Anlage kommen.

Wie sich den Fig. 3 bis 5 entnehmen lässt, lassen sich die beiden Lagerteile 43, 44 vorzugsweise in einem gemeinsamen Spritzwerkzeug herstellen. Dabei können die beiden Lagerteile 43, 44 auch einstückig, jedoch beweglich miteinander verbunden hergestellt werden. Beispielsweise kann hierzu ein Filmscharnier 67 am Übergang zwischen den beiden Lagerteilen 43, 44 ausgebildet sein. Die einstückige Herstellung der beiden Lagerteile 43, 44 gewährleistet, dass stets solche Lagerteile 43, 44 zu einer Lagerkonsole 23 zusammengebaut werden, die aus identischem Material und bei identischen Herstellungsbedingungen hergestellt worden sind. Das Filmscharnier 67 kann so ausgestaltet sein, dass es eine Schwenkbewegung der beiden Lagerteile 43, 44 relativ zueinander um eine parallel zur Drehachse 24 verlaufende Schwenkachse ermöglicht, die durch das Filmscharnier 67 definiert ist, um die jeweilige Lagerkonsole 23 zu bilden bzw. um den zusammengeklappten Zustand der Lagerkonsole 23 zu erzeugen. Für die Montage der Steuereinrichtung 20 können somit die erforderlichen Lagerkonsolen 23 in dem in den Fig. 3 bis 5 gezeigten aufgeklappten Zustand mit ihren ersten Lagerteilen 43 an den entsprechenden Positionen auf die Steuerwelle 21 aufgeclipst werden. Anschließend können die Lagerkonsolen 23 in den in den Fig. 6 bis 8 gezeigten zusammengeklapptem Zustand überführt werden, in dem das jeweilige zweite Lagerteil 44 um das Filmscharnier 67 bzw. um dessen Schwenkachse verschwenkt wird, bis die Positionsflächen 50 aneinander zur Anlage kommen. Hierbei werden auch die Führungsstifte 51 in die Führungsöffnungen 52 eingesteckt. Dabei kann vorgesehen sein, das Filmscharnier 67 so zu dimensionieren, dass es beim Zusammenbau der beiden Lagerteile 43, 44 zur Lagerkonsole 23 (zusammengeklappter Zustand) zerstört wird, so dass die beiden Lagerteile 43, 44 nach dem Zusammenbau bzw. nach dem Zusammenklappen der Lagerkonsole 23 nicht mehr über das Filmscharnier 67 miteinander verbunden sind. Die Fig. 6 bis 8 zeigen derartige Ausführungsformen, bei denen nach dem Zusammenklappen der Lagerkonsole 23 das Filmscharnier 67 zerstört ist bzw. nicht mehr vorhanden ist. Alternativ lässt sich das Filmscharnier 67 auch so dimensionieren, dass es durch das Zusammenklappen der Lagerkonsole 23 nicht zerstört wird, sondern eine federelastische Verbindung zwischen den beiden Lagerteilen 43, 44 schafft, so dass die Lagerabschnitte 45, 47 beim Zusammenklappen der Lagerteile 43, 44 relativ zueinander verstellbar sind und durch das Filmscharnier 67 eine Ausrichtung der beiden Lagerabschnitte 45, 47 relativ zueinander nicht behindert wird.

## Patentansprüche

1. Saugmodul einer Frischluftanlage (5) für eine Brennkraftmaschine (1),
- mit einem Gehäuse (14), das mehrere von Frischluft durchströmbare Öffnungen (17) aufweist,
- mit einer Steuereinrichtung (20) zum Steuern eines durchströmbaren Querschnitts wenigstens einer der Öffnungen (17),
- wobei die Steuereinrichtung (20) wenigstens eine Steuerwelle (21) und wenigstens eine drehfest auf der Steuerwelle (21) angeordnete Steuerklappe (22) für die jeweilige Öffnung (17) aufweist,
- wobei die Steuerwelle (21) mittels wenigstens einer Lagerkonsole (23) am Gehäuse (14) um eine Drehachse (24) drehbar gelagert ist,
- wobei das Gehäuse (14) wenigstens eine Lageraufnahme (25) zum Aufnehmen der jeweiligen Lagerkonsole (23) aufweist,
- wobei die Lageraufnahme (25) eine Einführöffnung (27) aufweist,
- wobei die jeweilige Lagerkonsole (23) in einer senkrecht zur Drehachse (24) orientierten Einführrichtung (28) durch die jeweilige Einführöffnung (27) in die zugehörige Lageraufnahme (25) eingeführt ist,
- wobei die jeweilige Lagerkonsole (23) an ihrer Außenseite zwei Außenflächen (29) aufweist, die bezüglich einer Querrichtung (30), die senkrecht zur Drehachse (24) und senkrecht zur Einführrichtung (28) verläuft, voneinander abgewandt sind,
- wobei die jeweilige Lagerkonsole (23) an ihren Außenflächen (29) jeweils wenigstens einen davon abstehenden Positionsblock (31) aufweist,
- wobei die jeweilige Lageraufnahme (25) an ihrer Innenseite (32) für den jeweiligen Positionsblock (31) eine dazu komplementäre Führungskontur (33) zum Ausrichten der Lagerkonsole (23) in einer parallel zur Drehachse (24) verlaufenden Längsrichtung (34) und in der Querrichtung (30) aufweist,
**dadurch gekennzeichnet,**
**dass** die jeweilige Lagerkonsole (23) auf jeder ihrer beiden Außenflächen (29) zumindest zwei solche Positionsblöcke (31a, 31b) aufweist, die in der Einführrichtung (28) voneinander beabstandet sind.

2. Saugmodul nach Anspruch 1,
**dadurch gekennzeichnet,**
**dass** die jeweilige Lagerkonsole (23) an ihren Außenflächen (29) ausschließlich über diese Positionsblöcke (31) mit dem Gehäuse (14) in Kontakt steht.

3. Saugmodul nach Anspruch 1 oder 2,
**dadurch gekennzeichnet,**
**dass** die jeweilige Lagerkonsole (23) in der Längsrichtung (34) und/oder in der Einführrichtung (28) und/oder in der Querrichtung (30) ausschließlich über diese Positionierblöcke (31) mit dem Gehäuse (14) in Kontakt steht.

4. Saugmodul nach einem der Ansprüche 1 bis 3,
**dadurch gekennzeichnet,**
- **dass** der jeweilige Positionsblock (31) eine parallel zur Längsrichtung (34) gemessene Länge aufweist, die kleiner ist als eine parallel zur Längsrichtung (34) gemessene Länge der Lagerkonsole (23), und/oder
- **dass** der jeweilige Positionsblock (31) eine parallel zur Einführrichtung (28) gemessene Höhe aufweist, die kleiner ist als eine parallel zur Einführrichtung (28) gemessene Höhe der Lagerkonsole (23).

5. Saugmodul nach einem der Ansprüche 1 bis 4,
**dadurch gekennzeichnet,**
- **dass** der jeweilige Positionsblock (31) von zwei in der Längsrichtung (34) voneinander entfernten Längsenden der Lagerkonsole (23) jeweils beabstandet ist, und/oder
- **dass** der jeweilige Positionsblock (31) von zwei in der Einführrichtung (28) voneinander entfernten Enden der Lagerkonsole (23) jeweils beabstandet ist.

6. Saugmodul nach einem der Ansprüche 1 bis 5,
**dadurch gekennzeichnet,**
- **dass** der jeweilige Positionsblock (31) zwei bezüglich der Längsrichtung (34) voneinander abgewandte ebene Längspositionierflächen (35) aufweist, die sich parallel zueinander und senkrecht zur Längsrichtung (34) erstrecken,
- **dass** die jeweilige Lageraufnahme (25) an ihrer Innenseite (32) für den jeweiligen Positionsblock (31) zwei bezüglich der Längsrichtung (34) einander zugewandte ebene Längsführungsflächen (36) aufweist, die sich parallel zueinander und senkrecht zur Längsrichtung (34) erstrecken und an denen je eine der Längspositionierflächen (35) des jeweiligen Positionsblocks (31) flächig anliegt.

7. Saugmodul nach einem der Ansprüche 1 bis 6,
**dadurch gekennzeichnet,**
- **dass** der jeweilige Positionsblock (31) eine ebene Querpositionierfläche (37) aufweist, die sich senkrecht zur Querrichtung (30) erstreckt,
- **dass** die jeweilige Lageraufnahme (25) an ihrer Innenseite (32) für den jeweiligen Positionsblock (31) eine ebene Querführungsfläche (38) aufweist, die sich senkrecht zur Querrichtung (30) erstreckt und an der die Querpositionierfläche (37) des jeweiligen Positionsblocks (31) flächig anliegt.

8. Saugmodul nach einem der vorhergehenden Ansprüche,
**dadurch gekennzeichnet,**
- **dass** auf der jeweiligen Außenfläche (29) wenigstens zwei solche Positionsblöcke (31a, 31b) in der Einführrichtung (28) zueinander fluchtend angeordnet sind,
- **dass** der in der Einführrichtung (28) vorangehende Positionsblock (31a) kleiner dimensioniert ist als der in der Einführrichtung (28) nachfolgende Positionsblock (31b).

9. Saugmodul nach einem der vorhergehenden Ansprüche,
**dadurch gekennzeichnet,**
**dass** der eine Positionsblock (31a) in der Einführrichtung (28) zwischen der Steuerwelle (21) und dem anderen Positionsblock (31b) angeordnet ist.

10. Saugmodul nach einem der Ansprüche 1 bis 9,
**dadurch gekennzeichnet,**
**dass** die jeweilige Lagerkonsole (23) auf beiden Außenflächen (29) jeweils wenigstens zwei in der Längsrichtung (34) voneinander beabstandete Positionsblöcke (31) aufweist.

11. Saugmodul nach einem der Ansprüche 1 bis 10,
**dadurch gekennzeichnet,**
**dass** an jeder Außenfläche (29) zumindest ein solcher Positionsblock (31) eine in der Einführrichtung (28) vorangehende ebene Anschlagfläche (41) aufweist, die sich senkrecht zur Einführrichtung (28) erstreckt und die flächig an einer ebenen Gegenanschlagfläche (42) anliegt, die an der Innenkontur (32) der jeweiligen Lageraufnahme (25) ausgebildet ist.

12. Saugmodul nach einem der Ansprüche 1 bis 11,
**dadurch gekennzeichnet,**
- **dass** die jeweilige Lagerkonsole (23) zwei Lagerteile aufweist, nämlich ein erstes Lagerteil (43) und ein zweites Lagerteil (44),
- **dass** das erste Lagerteil (43) einen ersten Lagerabschnitt (45) aufweist, an dem die Steuerwelle (21) mit einem ersten Umfangsabschnitt (46) anliegt,
- **dass** das zweite Lagerteil (44) einen dem ersten Lagerabschnitt (45) gegenüberliegenden zweiten Lagerabschnitt (47) aufweist, an dem die Steuerwelle (21) mit einem dem ersten Umfangsabschnitt (46) gegenüberliegenden zweiten Umfangsabschnitt (48) anliegt,
- **dass** die beiden Lagerteile (43, 44) je eine Innenfläche (49) aufweisen, die einander bezüglich der Querrichtung (30) zugewandt sind und die jeweils wenigstens eine ebene Positionierfläche (50) aufweisen, die sich senkrecht zur Querrichtung (30) erstrecken,
- wobei wenigstens eine solche Positionierfläche (50) des ersten Lagerteils (43) flächig an wenigstens einer solchen Positionierfläche (50) des zweiten Lagerteils (44) anliegt.

13. Saugmodul nach einem der Ansprüche 1 bis 12,
**dadurch gekennzeichnet,**
- **dass** das Gehäuse (14) zumindest eine Einlassöffnung (16) für Frischluft und einen Flanschabschnitt (19) aufweist, der die steuerbaren Öffnungen (17) aufweist, die dort Auslassöffnungen für Frischluft bilden.

14. Saugmodul nach Anspruch 13,
**dadurch gekennzeichnet,**
- **dass** der Flanschabschnitt (19) an seiner Anschlussseite (26) wenigstens eine Dichtungsnut (60) zur Aufnahme einer Dichtung (59) aufweist, die im an die Brennkraftmaschine (1) angeschlossenen Zustand des Gehäuses (14) an der Brennkraftmaschine (1) dichtend anliegt,
- **dass** zumindest eine solche Lageraufnahme (25) in einem Abschnitt der Dichtungsnut (60) angeordnet ist, so dass die Dichtungsnut (60) im Bereich dieser Lageraufnahme (25) eine Nutunterbrechung (61) aufweist,
- **dass** zumindest eine solche Lagerkonsole (23) im Bereich der Dichtungsnut (60) einen Nutabschnitt (62) aufweist, der die Dichtungsnut (60) im Bereich dieser Nutunterbrechung (61) komplettiert.

15. Saugmodul nach Anspruch 14,
**dadurch gekennzeichnet,**
**dass** zumindest ein solcher Positionsblock (31) eine von der Steuerwelle (21) abgewandte Haltefläche (64) aufweist, die bündig an einen Nutgrund (63) des Nutabschnitts anschließt.

## Claims

1. An intake module of a fresh air system (5) for an internal combustion engine (1).
- comprising a housing (14), which has a plurality of openings (17) through which fresh air can flow,
- comprising a control device (20) for controlling a cross section, through which flow can pass, of at least one of the openings (17),
- wherein the control device (20) has at least one control shaft (21) and at least one control valve (22), which is arranged on the control shaft (21) in a rotationally fixed manner, for the respective opening (17),
- wherein the control shaft (21) is mounted on the housing (14) by means of at least one bearing bracket (23) such that it can rotate about a rotational axis (24),
- wherein the housing (14) has at least one bearing receiving portion (25) for receiving the respective bearing bracket (23),
- wherein the bearing receivinmg portion (25) has an insertion opening (27),
- wherein the respective bearing bracket (23) is inserted in an insertion direction (28), which is oriented perpendicular to the rotational axis (24) through the respective insertion opening (27) into the associated bearing receiving portion (25),
- wherein, on its outside, the respective bearing bracket (23) has two outer surfaces (29), which face away from one another with respect to a transverse direction (30), which runs perpendicular to the rotational axis (24) and perpendicular to the insertion direction (28),
- wherein, on its outer surfaces (29), the respective bearing bracket (23) in each case has at least one positioning block (31) projecting therefrom,
- wherein, on its inside (32), the respective bearing receiving portion (25) has a guide contour (33), which is complementary thereto, for the respective positioning block (31) for aligning the bearing bracket (23) in a longitudinal direction (34), which runs parallel to the rotational axis (24), and in the transverse direction (30), **characterized in**
**that**, on each of its two outer surfaces (29), the respective bearing bracket (23) has at least two such positioning blocks (31a, 31b), which are spaced apart from one another in the insertion direction (28).

2. The intake module according to claim 1,
**characterized in**
**that** the respective bearing bracket (23), on its outer surfaces (29), is in contact with the housing (14) only via these positioning blocks (31).

3. The intake module according to claim 1 or 2,
**characterized in**
**that** the respective bearing bracket (23) in the longitudinal direction (34) and/or in the insertion direction (30) and/or in the transverse direction (28) is in contact with the housing (14) only via these positioning blocks (31).

4. The intake module according to one of claims 1 to 3,
**characterized in**
- **that** the respective positioning block (31) has a length, which is measured parallel to the longitudinal direction (34) and which is smaller than a length of the bearing bracket (23), which is measured parallel to the longitudinal direction (34), and/or
- **that** the respective positioning block (31) has a height, which is measured parallel to the insertion direction (28) and which is smaller than a height of the bearing bracket (23), which is measured parallel to the insertion direction (28).

5. The intake module according to one of claims 1 to 4,
**characterized in**
- **that** the respective positioning block (31) is in each case spaced apart from two longitudinal ends of the bearing bracket (23), which are spaced apart from one another in the longitudinal direction (34), and/or
- **that** the respective positioning block (31) is in each case space apart from two ends of the bearing bracket (23), which are spaced apart from one another in the insertion direction (28).

6. The intake module according to one of claims 1 to 5,
**characterized in**
- **that** the respective positioning block (31) has two flat longitudinal positioning surfaces (35), which face away from one another with respect to the longitudinal direction (34) and which extend parallel to one another and perpendicular to the longitudinal direction (34),
- **that**, on its inside (32), the corresponding bearing receiving portion (25) has two flat longitudinal guide surfaces (36), which face one another with respect to the longitudinal direction (34) and which extend parallel to one another and perpendicular to the longitudinal direction (34) and against which one of the longitudinal positioning surfaces (35) of the respective positioning block (31) abuts in a flat manner in each case.

7. The intake module according to one of claims 1 to 6,
**characterized in**
- **that** the respective positioning block (31) has a flat transverse positioning surface (37), which extends perpendicular to the transverse direction (30).
- **that**, on its inside (32), the corresponding bearing receiving portion (25) has a flat transverse guide surface (38) for the respective positioning block (31), which extends perpendicular to the transverse direction (30) and against which the transverse positioning surface (37) of the respective positioning block (31) abuts in a flat manner.

8. The intake module according to one of the preceding claims,
**characterized in**
- **that** on the respective outer surface (29), at least two such positioning blocks (31a, 31b) are arranged so as to be aligned relative to one another in the insertion direction (28),
- **that** the positioning block (31a), which leads in the insertion direction (28), is dimensioned so as to be smaller than the positioning block (31b), which trails in the insertion direction (28).

9. The intake module according to one of the preceding claims,
**characterized in**
**that** the one positioning block (31a) is arranged between the control shaft (21) and the other positioning block (31b) in the insertion direction (28).

10. The intake module according to one of claims 1 to 9,
**characterized in**
**that** the respective bearing bracket (23) on both outer surfaces (29) in each case has at least two positioning blocks (31), which are spaced apart from one another in the longitudinal direction (34).

11. The intake module according to one of claims 1 to 10,
**characterized in**
**that** at least one such positioning block (31) has, at each outer surface (29), a flat stop surface (41), which leads in the insertion direction (28) and which extends perpendicular to the insertion direction (28) and which abuts flat against a flat counter stop surface (42), which is embodied on the inner contour (32) of the respective bearing bracket (25).

12. The intake module according to one of claims 1 to 11,
**characterized in**
- **that** the respective bearing bracket (23) has two bearing parts, namely a first bearing part (43) and a second bearing part (44),
- **that** the first bearing part (43) has a first bearing section (45), against which the control shaft (27) abuts with a first circumferential section (46),
- **that** the second bearing part (44) has a second bearing section (47), which is located opposite the first bearing section (45) and against which the control shaft (21) abuts with a second circumferential section (48), which is located opposite the first circumferential section (46),
- **that** the two bearing parts (43, 44) in each case have an inner surface (49), which face one another with respect to the transverse direction (30) and which in each case have at least one flat positioning surface (50), which extend perpendicular to the transverse direction (30),
- wherein at least one such positioning surface (50) of the first bearing part (43) abuts flat against at least one such positioning surface (50) of the second bearing part (44).

13. The intake module according to one of claims 1 to 12,
**characterized in**
**that** the housing (14) has at least one inlet opening (16) for fresh air and a flange section (19), which has the controllable openings (17), which form outlet openings for fresh air at that location.

14. The intake module according to claim 13,
**characterized in**
- **that**, on its connection side (26), the flange section (19) has at least one sealing groove (60) for receiving a seal (59), which abuts against the internal combustion engine (1) so as to form a seal when the housing (14) is connected to the internal combustion engine (1),
- **that** at least one such bearing receiving portion (25) is arranged in a section of the sealing groove (60), so that the sealing groove (60) has a groove break (61) in the area of this sealing receiving portion (25),
- **that** at least one such bearing bracket (23) has, in the area of the sealing groove (60), a groove section (62), which completes the sealing groove (60) in the area of this groove break (61).

15. The intake module according to claim 14,
**characterized in**
**that** at least one such positioning block (31) has a holding surface (64), which faces away from the control shaft (21) and which adjoins a groove base (63) of the groove section in a flush manner.

## Revendications

1. Module d'aspiration d'une installation d'air frais (5) pour un moteur à combustion interne (1),
- avec un carter (14), qui comporte plusieurs orifices (17) par lesquels peut passer de l'air frais,
- avec un dispositif de commande (20) pour commander une section transversale d'au moins un des orifices (17) par laquelle peut passer de l'air frais,
- dans lequel le dispositif de commande (20) comporte au moins un arbre de commande (21) et au moins un clapet de commande (22) agencé sur l'arbre de commande (21) de manière solidaire en rotation pour l'orifice respectif (17),
- dans lequel l'arbre de commande (21) est logé de manière rotative autour d'un axe de rotation (24) au moyen d'au moins une console de palier (23) au niveau du carter (14),
- dans lequel le carter (14) comporte au moins un logement de palier (25) pour loger la console de palier (23) respective,
- dans lequel le logement de palier (25) comporte une ouverture d'introduction (27),
- dans lequel la console de palier (23) respective est introduite dans une direction d'introduction (28) orientée perpendiculairement à l'axe de rotation (24) à travers l'ouverture d'introduction (27) respectif dans le logement de palier (25) associé,
- dans lequel la console de palier (23) respective comporte au niveau de son côté extérieur deux surfaces extérieures (29) qui regardent à l'opposé l'une de l'autre par rapport à une direction transversale (30) qui est perpendiculaire à l'axe de rotation (24) et perpendiculaire à la direction d'introduction (28),
- dans lequel la console de palier (23) respective comporte au niveau de ses surfaces extérieures (29) à chaque fois au moins un bloc de positionnement (31) dépassant de celles-ci,
- dans lequel le logement de palier (25) respectif comporte au niveau de son côté intérieur (32) pour le bloc de positionnement (31) respectif un contour de guidage complémentaire (33) en vue de l'orientation de la console de palier (23) dans une direction longitudinale (34) s'étendant parallèlement à l'axe de rotation (24) et dans la direction transversale (30),
**caractérisé**
**en ce que** la console de palier (23) respective comporte sur chacune de ses deux surfaces extérieures (29) au moins deux blocs de positionnement (31a, 31b) de ce type qui sont distants l'un de l'autre dans la direction d'introduction (28).

2. Module d'aspiration selon la revendication 1,
**caractérisé**
**en ce que**, au niveau de ses surfaces extérieures (29), la console de palier (23) respective est en contact avec le carter (14) exclusivement par l'intermédiaire de ces blocs de positionnement (31).

3. Module d'aspiration selon la revendication 1 ou 2,
**caractérisé**
**en ce que**, dans la direction longitudinale (34) et/ou dans la direction d'introduction (28) et/ou dans la direction transversale (30), la console de palier (23) respective est en contact avec le carter (14) exclusivement par l'intermédiaire de ces blocs de positionnement (31).

4. Module d'aspiration selon l'une quelconque des revendications 1 à 3,
**caractérisé**
- **en ce que** le bloc de positionnement (31) respectif a une longueur, mesurée parallèlement à la direction longitudinale (34), qui est inférieure à une longueur, mesurée parallèlement à la direction longitudinale (34), de la console de palier (23), et/ou
- **en ce que** le bloc de positionnement (31) respectif a une hauteur, mesurée parallèlement à la direction d'introduction (28), qui est inférieure à une hauteur, mesurée parallèlement à la direction d'introduction (28), de la console de palier (23).

5. Module d'aspiration selon l'une quelconque des revendications 1 à 4,
**caractérisé**
- **en ce que** le bloc de positionnement (31) respectif est distant à chaque fois de deux extrémités longitudinales de la console de palier (23) qui sont éloignées l'une de l'autre dans la direction longitudinale (34), et/ou
- **en ce que** le bloc de positionnement (31) respectif est distant à chaque fois de deux extrémités de la console de palier (23) qui sont éloignées l'une de l'autre dans la direction d'introduction (28).

6. Module d'aspiration selon l'une quelconque des revendications 1 à 5, **caractérisé**
- **en ce que** le bloc de positionnement (31) respectif comporte deux surfaces de positionnement longitudinal (35) planes qui regardent à l'opposé l'une de l'autre par rapport à la direction longitudinale (34) et qui s'étendent parallèlement l'une à l'autre et perpendiculairement à la direction longitudinale (34),
- **en ce que** le logement de palier (25) respectif comporte au niveau de son côté intérieur (32) pour le bloc de positionnement (31) respectif deux surfaces de guidage longitudinal (36) planes qui regardent l'une vers l'autre par rapport à la direction longitudinale (34) et qui s'étendent parallèlement l'une à l'autre et perpendiculairement à la direction longitudinale (34) et au niveau desquelles s'appuie à chaque fois par sa surface l'une des surfaces de positionnement longitudinal (35) du bloc de positionnement (31) respectif.

7. Module d'aspiration selon l'une quelconque des revendications 1 à 6,
**caractérisé**
- **en ce que** le bloc de positionnement (31) respectif comporte une surface de positionnement transversal (37) plane qui s'étend perpendiculairement à la direction transversale (30),
- **en ce que** le logement de palier (25) respectif comporte au niveau de son côté intérieur (32) pour le bloc de positionnement (31) respectif une surface de guidage transversal (38) plane qui s'étend perpendiculairement à la direction transversale (30) et au niveau de laquelle s'appuie par sa surface la surface de positionnement transversal (37) du bloc de positionnement (31) respectif.

8. Module d'aspiration selon l'une quelconque des revendications précédentes, **caractérisé**
- **en ce que**, sur la surface extérieure (29) respective, au moins deux blocs de positionnement (31a, 31b) de ce type sont agencés alignés l'un par rapport à l'autre dans la direction d'introduction (28),
- **en ce que** le bloc de positionnement (31a) antérieur dans la direction d'introduction (28) est de dimension plus petite que le bloc de positionnement (31b) postérieur dans la direction d'introduction (28).

9. Module d'aspiration selon l'une quelconque des revendications précédentes,
**caractérisé**
**en ce que** l'un des blocs de positionnement (31a) est agencé dans la direction d'introduction (28) entre l'arbre de commande (21) et l'autre bloc de positionnement (31b).

10. Module d'aspiration selon l'une quelconque des revendications 1 à 9,
**caractérisé en ce que**
la console de palier (23) respective comporte sur ses deux surfaces extérieures (29) à chaque fois au moins deux blocs de positionnement (31) distants l'un de l'autre dans la direction longitudinale (34).

11. Module d'aspiration selon l'une quelconque des revendications 1 à 10,
**caractérisé**
**en ce que**, au niveau de chaque surface extérieure (29), au moins un bloc de positionnement (31) de ce type comporte une surface de butée (41) plane qui est devant dans la direction d'introduction (28) et qui s'étend perpendiculairement à la direction d'introduction (28) et s'appuie par sa surface à une surface de butée complémentaire (42) plane qui est réalisée au niveau du contour intérieur (32) du logement de palier (25) respectif.

12. Module d'aspiration selon l'une quelconque des revendications 1 à 11,
**caractérisé**
- **en ce que** la console de palier (23) respective comporte deux parties de palier, à savoir une première partie de palier (43) et une deuxième partie de palier (44),
- **en ce que** la première partie de palier (43) comporte un premier tronçon de palier (45) au niveau duquel s'appuie l'arbre de commande (21) avec un premier tronçon circonférentiel (46),
- **en ce que** la deuxième partie de palier (44) comporte un deuxième tronçon de palier (47) qui est à l'opposé du premier tronçon de palier (45) et au niveau duquel s'appuie l'arbre de commande (21) avec un deuxième tronçon circonférentiel (48) qui est à l'opposé du premier tronçon circonférentiel (46),
- **en ce que** les deux parties de palier (43, 44) comportent chacune une surface intérieure (49), lesquelles surfaces intérieures regardent l'une vers l'autre par rapport à la direction transversale (30) et comportent chacune au moins une surface de positionnement (50) plane, lesquelles surfaces de positionnement s'étendent perpendiculairement à la direction transversale (30),
- dans lequel au moins une surface de positionnement (50) de ce type de la première partie de palier (43) s'appuie par sa surface à au moins une surface de positionnement (50) de ce type de la deuxième partie de palier (44).

13. Module d'aspiration selon l'une quelconque des revendications 1 à 12,
**caractérisé**
**en ce que**
- le carter (14) comporte au moins un orifice d'entrée (16) pour de l'air frais et un tronçon de bride (19) qui comporte les orifices (17) commandables qui forment là des orifices de sortie pour de l'air frais.

14. Module d'aspiration selon la revendication 13,
**caractérisé**
- **en ce que** le tronçon de bride (19) comporte au niveau de son côté de raccordement (26) au moins une rainure d'étanchéité (60) destinée à recevoir un joint d'étanchéité (59) qui s'appuie en assurant l'étanchéité au moteur à combustion interne (1) lorsque le carter (14) est raccordé au moteur à combustion interne (1),
- **en ce qu'**au moins un logement de palier (25) de ce type est agencé dans un tronçon de la rainure d'étanchéité (60) de telle sorte que la rainure d'étanchéité (60) comporte dans la zone de ce logement de palier (25) une interruption de rainure (61),
- **en ce qu'**au moins une console de palier (23) de ce type comporte dans la zone de la rainure d'étanchéité (60) un tronçon de rainure (62) qui complète la rainure d'étanchéité (60) dans la zone de cette interruption de rainure (61).

15. Module d'aspiration selon la revendication 14,
**caractérisé**
**en ce qu'**au moins un bloc de positionnement (31) de ce type comporte une surface de retenue (64) qui regarde à l'opposé de l'arbre de commande (21) et qui se raccorde en affleurant à un fond de rainure (63) du tronçon de rainure.
